# EUROPEAN PATENT SPECIFICATION

(11) **EP 1 232 353 B1**
(45) Date of publication and mention of the grant of the patent: **04.06.2003**
(21) Application number: 00977664.2
(22) Date of filing: 20.11.2000
(51) Int. Cl.: F16K 17/36

(54) **PRESSURE RELIEF VALVE**
ÜBERDRUCKVENTIL
SOUPAPE DE SECURITE

(30) Priority: 23.11.1999 GB 9927610; 05.04.2000 GB 0008299
(43) Date of publication of application: 21.08.2002
(73) Proprietor: Envirotech Products Limited, Bradford, West yorkshire BD7 1HR (GB)
(72) Inventor: PLATT, Grahame, Kirkthorpe Wakefield WF1 5SZ (GB)
(74) Representative: Harrison Goddard Foote
(86) International application number: GB0004417
(87) International publication number: WO01038763

(56) References cited:
- US-A- 3 738 384
- US-A- 4 646 772
- US-A- 4 753 262
- US-A- 5 975 105

## Description

The present invention relates to a valve and, in particular, to pressure relief valve.

Conventionally, pressure release or relief valves are used in conjunction with fluid that evaporates readily and which may, in the absence of a pressure relief valve, result in a dangerous build-up of pressure. If the vapour is, for example, highly flammable or corrosive, an explosion involving such vapour would be clearly dangerous.

Rather than continuously venting potentially hazardous vapour into the atmosphere, pressure relief valves are arranged to vent vapour only when the pressure within a storage vessel has reached a predetermined pressure.

It can be appreciated that in some circumstances such as, for example, in the case of an overturned petrol tanker, the valves are arranged to assume a closed position to avoid spilling petrol or other hazardous fluids being transported. It is known to use an inertial mass or pendulum to close the pressure relief valve in such circumstances. A valve having such a mode of operation is conventionally said to incorporate a roll-over mechanism. As the pendulum deviates from the vertical, the valve closes and ceases to act as a pressure release mechanism. As the pendulum moves toward the vertical, the valve opens and the valve continues to act as a pressure release mechanism.

It has been found that such a valve would be actuated and therefore become closed when a tanker either climbs or descends a steep hill. Further, the valve must be capable of operating correctly if the tanker in which the valve is used is subjected to a 2g load in the direction of travel, under, for example, heavy braking conditions, a 1g load at right angles to the direction of travel, when, for example, cornering or a 1g load vertically upwards or a 2g load vertically downwards, when, for example, experiencing a bump in the road. It has been found that under such circumstances there is a risk of closing inadvertently the valve when the pressure inside the tanker is high but not sufficiently high to instigate venting or during venting. Such high pressure or inadvertent closure during venting can prevent the valve from returning to the open position once the roll-over mechanism pendulum is not actuated, that is, no longer inclined relative to the vertical.

It is an object of the present invention at least to mitigate some of the problems of the prior art.

Accordingly, a first aspect of the present invention provides a pressure relief valve for venting a fluid from a container comprising an inertially actuable roll-over mechanism, having a pendulum and a pivot plate, arranged, in a first position of the pendulum, to urge a first .closure member towards a first corresponding seat to form a fluid tight seal, a second closure member arranged to allow venting at at least a first predeterminable pressure and first means urging the first closure member away from the first corresponding seat to allow venting at the first predeterminable pressure when the pendulum of the inertially actuable roll-over mechanism is in a second position.

A second aspect of the present invention provides a pressure relief valve for venting a fluid from a container comprising an inertially actuable roll-over mechanism, haying a pendulum and a pivot plate, arranged, in a first position of the pendulum, to urge a first closure member towards a first corresponding seat to form a fluid tight seal, a second closure member arranged to allow venting at at least a first predeterminable pressure and first means for urging the first closure member away from the first corresponding seat to allow venting at the first predeterminable pressure when the pendulum of the inertially actuable roll-over mechanism is in a second position.

Preferred embodiments provide a pressure relief valve in which the first means urging or the first means for urging the first closure member away from the first corresponding seat is disposed between the first closure member and the first corresponding seat.

Preferably, an embodiment provides a pressure relief valve in which the first means urging or the first means for urging the closure member away from the seat comprises at least one of a leaf spring, wave spring or coil spring.

An embodiment provides a pressure relief valve in which the inertially actuable roll-over mechanism comprises a ball and socket joint and a pivot plate that co-operate to urge the pivot plate against the closure member. Preferably, the socket is formed using two retainer plates having mutually facing recesses for receiving the ball.

Once a tanker has been up-turned or is otherwise incorrectly orientated, there may be a need, to mitigate any danger in the case of the tanker conveying volatile fluids, to drain the tank. Accordingly, an embodiment provides a pressure relief valve comprising drainage means for urging the first closure member away from the first corresponding seat such that the fluid tight seal can be broken when the inertially actuable roll-over mechanism is moved or urged away from the first position.

Preferably, the drainage means comprises at least a moveable sealing member that is urged against internal shoulders of an aperture of the second closure member plunger to form a further fluid tight seal.

It can be appreciated that the drainage means also doubles as or can be used in the alternative as a vacuum release means during conventional or other draining of fluid from a tank to relieve any negative pressure differential between the interior and exterior of the tank.

An embodiment provides a pressure relief valve in which the moveable sealing member comprises an adjustment means for setting the force with which the sealing member is urged towards the internal shoulders. Preferably, the adjustment means comprises a shim or washer of selectable thickness.

It will be appreciated that the pressure at which a pressure relief valve is intended to be actuated may vary according to, for example, jurisdiction and/or fluid being transported. Suitably, an embodiment provides a pressure relief valve, in which the second closure member comprises an adjustment means for setting the force with which the second closure member is urged towards a second corresponding seat.

During drainage, via conventional means, of a tank to which a pressure relief valve is fitted, it will be appreciated that a vacuum may result within the tank. Suitably, an embodiment provides a pressure relief valve in which the second closure member further comprises a mechanism to allow fluid to flow through the second closure member in at least one of first and second mutually opposing directions via a channel formed in the second closure member. The vacuum relief can also be used as a drainage means. Therefore, an embodiment provides a valve in which the first direction is such that a fluid can flow out of a container incorporating the valve. Preferably, an embodiment provides a valve in which the second direction is such that a fluid can flow into a container incorporating the valve.

Embodiments of the present invention will now be described by way of example only with reference to the accompanying drawings in which:
figures 1a and 1b illustrate a cross-sectional view of a pressure relief valve having a roll-over mechanism according to a first embodiment;
figure 2 illustrates in greater detail an embodiment of the valve body;
figure 3 illustrates a cross-sectional view of a pressure relief valve having a roll over mechanism according to a second embodiment;

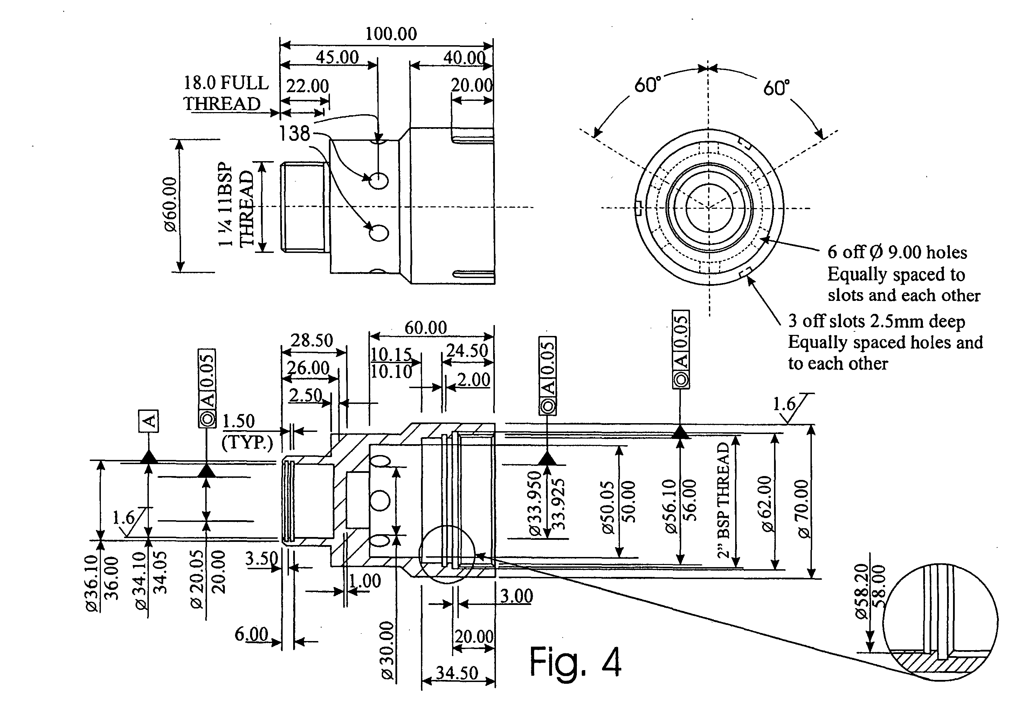

figure 4 illustrates in greater detail cross-sectional and side and plan views of the valve body of the second embodiment shown in figure 3;
figure 5 shows various views of a valve plunger for use in a pressure relief valve as illustrated in figures 1 to 4;
figure 6 shows a closure plate for use in a pressure relief valve as illustrated in figures 3 and 4;
figure 7 shows a third embodiment of a pressure relief valve;
figures 8a to 8d show side, plan, sectional and detailed views of the valve body of the third embodiment;
figures 9a to 9d show end, side, end and sectional views respectively of a valve plunger of the third embodiment;
figures 10a to 10c show side, plan and sectional views of the closure plate of the third embodiment;
figures 11a to 11c show end, plan and sectional views of the valve seat of the third embodiment;
figures 12a and 12b show sectional and plan views respectively of the rollover pendulum of the third embodiment;
figures 13a and 13b show end and plan views respectively of a vacuum plate of the third embodiment;
figures 14a and 14b show an embodiment of a shim suitable for use with the third embodiment;
figures 15a and 15b show sectional and plan views respectively of a retainer plate of the third embodiment;
figures 16a and 16b show plan and sectional views respectively of a retainer base of the third embodiment;
figures 17a to 17c show end, plan and sectional views of a pivot of the third embodiment;
figures 18a to 18c show side, plan and sectional views of a closure or pivot plate of the third embodiment;
figures 19a and 19b show plan and sectional views of a first internal retaining ring of the third embodiment;
figures 20a and 20b show plan and sectional views respectively of a second internal retaining ring of the third embodiment;
figures 21a and 21b show plan and sectional views respectively of a third internal retaining ring of the third embodiment;
figures 22a and 22b show plan and end views of a first O-ring of the third embodiment;
figures 23a and 23b show a second O-ring of the third embodiment;
figures 24a and 24b show plan and end views respectively of a third O-ring of the third embodiment;
figures 25a and 25b show plan and side views respectively of a fourth O-ring of the third embodiment;
figures 26a and 26b show side and plan views of an adjuster screw of the third embodiment;
figures 27a and 27b show side and plan views respectively of a screw for the retainer plate and retainer base of the third embodiment;
figures 28a and 28b show plan and side views respectively of a magnet of the third embodiment;
figure 29 shows a wire gauze of the third embodiment;
figure 30 illustrates a side and sectional views of the third embodiment together with an optional raincap and rainbody;
figure 31 depicts an embodiment of a raincap body; and
figure 32 shows an embodiment of a raincap top.

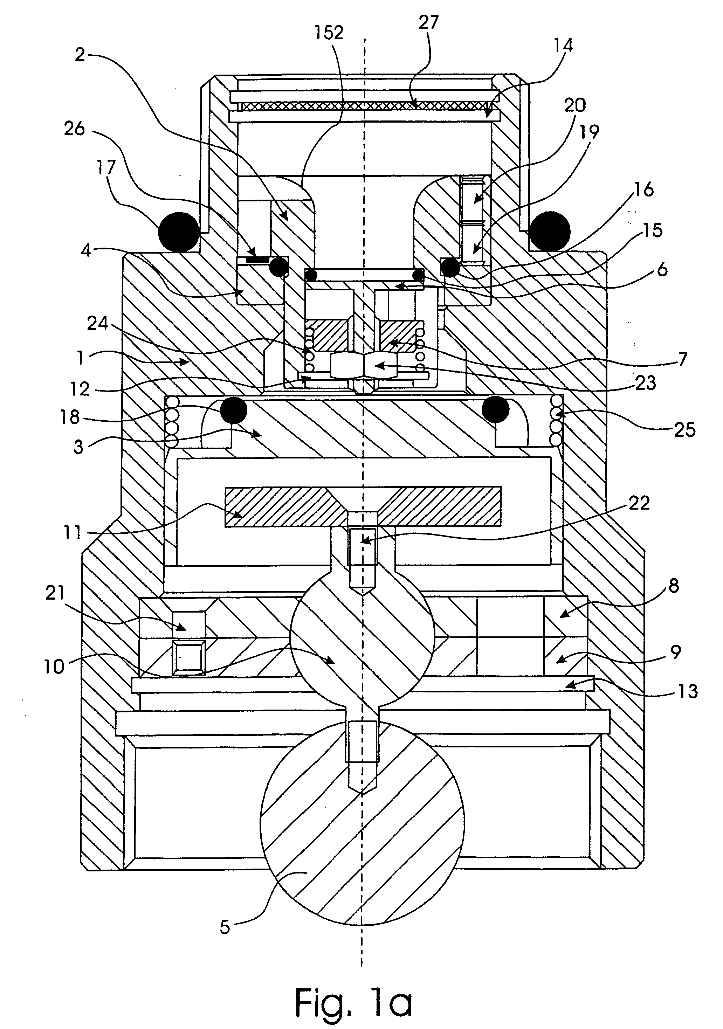

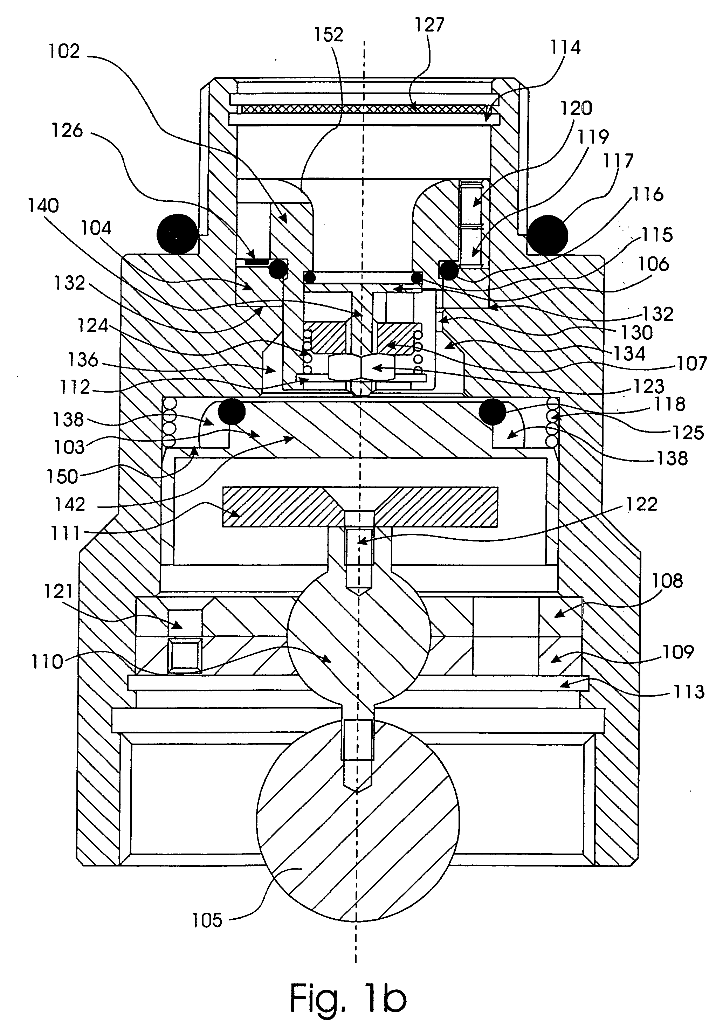

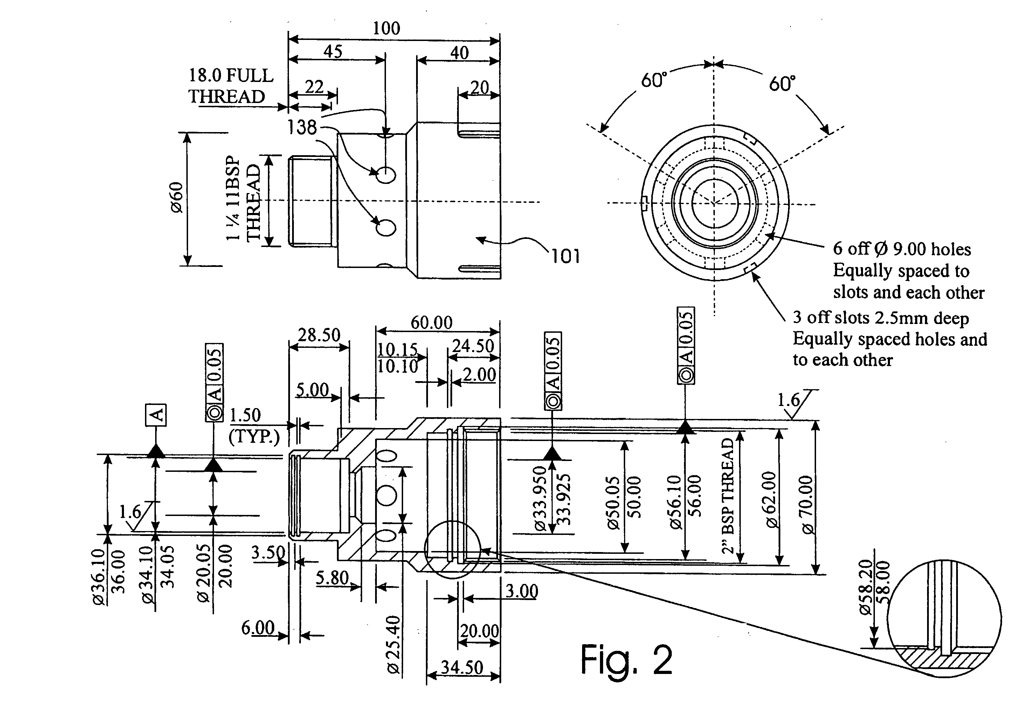

Referring to figure 1a and 1b there is shown a pressure relief valve assembly 100 comprising a roll-over mechanism. The valve assembly 100 comprises a valve body 101 housing a valve plunger 102 that is slidingly movable along a longitudinal axis within a neck of the valve body 101. The valve plunger 102 has a circular shoulder that sits, in a closed position, on a corresponding valve seat 104. Referring to figure 2, it can be seen that the valve body comprises a plurality of vent holes 138 that communicate between the exterior and interior of the valve to allow vapour to be vented. The vent holes 138 have axes that are co-linear with radii of the valve body, that is, they are perpendicular to the valve longitudinal axis.

The valve assembly uses permanent magnets 126 that are arranged to urge the valve plunger 102 against the valve seat 104. The permanent magnets 126 may be disposed within, on or form part of the valve seat 104 or within, on or form part of the circular shoulder of the valve plunger 102. The valve assembly uses the non-linear force characteristics of the magnets to urge the valve assembly towards the closed position even though the vapour pressure may still be slightly above a predetermined pressure at which the valve is designed to vent. The magnets are arranged to ensure that there is magnetic attraction between the valve seat and valve plunger.

An embodiment provides a valve plunger comprising compressed spring 124 that cooperates with a seal plate 106 and a circlip 112 to seal a channel in the valve plunger from the exterior of the valve to the interior. Preferably, the channel is used to allow air to flow into the container if a vacuum exists within the container. However, an embodiment may use the channel to allow fluid to be drained from the container by connecting an extraction nozzle (not shown) to the valve assembly which has an appropriately shaped and sized plunger to displace the seal plate and allow fluid drainage.

An embodiment is provided in which the seal plate and the spring are mounted on a central spindle 140. The degree of compression of the spring can be set by appropriate positioning of the seal plate 106 or an adjuster plate 107 on the spindle.

When the pressure within a container (not shown) in which the valve assembly 100 is used, exceeds a predetermined level, for example, a pressure in the range of not less than 20 millibars and not more than 120 millibars, the valve plunger 102 is urged away from the valve seat 104 into an open state. In the open state, the vapour within the container is vented thereby relieving the pressure within the container.

The predetermined pressure level at which venting occurs can be established manually by adjusting a number of adjuster screws 119 that are positioned circumferentially around the body of the valve plunger at substantially the same radius. The adjuster screws 119 control the distance and hence the magnitude of the magnetic force of attraction between the permanent magnets and an opposing face of the valve seat by protruding beyond the base of the valve plunger. It will be appreciated that the magnetic force of attraction diminishes in a non-linear manner with distance. The adjuster screws 119, once set at a selected position, corresponding to a desired pressure level at which venting should occur, are locked into position by corresponding locking screws 120. The locking screws are arranged to abut firmly against the adjuster screws 119 to hold the latter in position.

Although the above embodiment has the magnets arranged at substantially the same radius, an embodiment can be realised in which the magnets are positioned at different radii. In an alternative embodiment, the permanent magnets can be carried on the ends of the adjuster screws 119 and appropriately recessed within the through holes for the adjuster and locking screws to control the force of attraction.

The above valve incorporates a roll-over mechanism in which a closure plate 103 is arranged to be urged towards internal shoulders of a cylindrical cavity of the valve body 101 by movement of pivot plate 111 about a fulcrum. The pivot plate 111 pivots about ball 110 of a ball and socket joint in response to movement of a ball weight or pendulum 105 about the longitudinal axis of the valve assembly. The socket is formed by a pair of retainer plates 108 and 109 having mutually facing recesses that form a complementary socket for the ball. The retainer plates are coupled together using a number of screws 121 and kept in place by a circlip 113. The retainer plates comprise a number of holes through which vapour can flow to alleviate any vacuum that may otherwise result due to movement of the closure plate 103. The pivot plate 111 is coupled to a pivot stem of the ball 110 using a screw 122.

The closure plate 103 has a dependent skirt, that slides snugly along an inner wall of the cylindrical cavity, and a closure member comprising an O-ring 118 is mounted on a head of the closure plate 103. The O-ring 118 when urged against the internal shoulders of the cylindrical cavity forms a fluid tight seal around the opening formed by the neck of the valve body 101. The skirt ensures that the O-ring is substantially concentric with the neck of the valve body 101.

The internal shoulders of the cylindrical cavity carry means 125 for urging the closure plate 103 away from the opening formed by the neck of the valve body 101 to break the fluid tight seal. Preferably, the means for urging the closure plate 103 away from the opening formed by the neck comprises a leaf spring, wave spring or coil spring 125. Alternatively, the means for urging the closure plate 103 away from the neck can be carried by the closure plate 103 and arranged to act against the internal shoulders of the cylindrical cavity. The mass of the closure plate 103 and the reaction of the means for urging the closure plate 103 away from the neck are such that even under a high pressure, that is, a pressure above the predetermined pressure at which the valve assembly should ordinarily vent vapour, that pressure is insufficient to keep the O-ring 118 urged against the internal shoulders. Therefore, when the axis of the pendulum is substantially co-linear with the longitudinal axis of the valve assembly, the closure plate 103 is pushed away from the internal shoulders of the cavity so the valve can continue to vent vapour safely.

Preferably, a wire gauze 127 is retained within an outlet of the valve assembly. The wire gauze 127 reduces the risk of fire or an explosion within the container if the vented vapour is flammable.

A fluid tight seal between the valve assembly and a container (not shown) is realised using an O-ring 117. Similarly, a fluid tight seal between the valve plunger 102 and the valve seat 104 is realised using an O-ring 116. A further fluid tight seal between the seal plate 106 and an internal circular shoulder of the valve plunger 102 is realised using an O-ring 115.

Referring to figure 2 there is shown in third angle projection front, end and sectional views together with respective dimensions of an embodiment of a valve body according to the first embodiment. These views show more clearly the holes 138 in the valve body 101 via which fluid can be vented.

Advantageously, the valve plunger 102 can be removed from the valve assembly for calibration and/or testing. The pressure at which the valve plunger 102 is lifted from the valve seat 104 can be set by varying the proximity of the magnets 126 to the valve seat. This ensures that the valve plunger, which is a relatively small component, can be swiftly tested and calibrated.

Furthermore, due to the non-linear characteristics of the permanent magnets 126, the valve plunger 103 is moved between the closed position and an open position such that the flow area through which vapour can be vented is significantly greater than the flow area of a corresponding spring based valve plunger at a given pressure. In an embodiment, the valve assembly can be either closed or substantially fully open. It will be appreciated that in prior art valve assemblies the available flow area through which vapour can be vented is proportional to the degree of extension or compression of a spring. In contrast, the flow area of the embodiments described is not dependent upon spring characteristics and hence varies in a non-linear manner with pressure.

It will be appreciated that the term fluid when used herein encompasses at least one of gases, vapours and liquids.

Although the above embodiment is arranged to vent fluid via radially directed valve body holes 138 and a longitudinal valve opening having a valve plunger 102, the present invention is not limited thereto. An embodiment can be realised in which the venting is substantially longitudinal. The substantially longitudinal venting can be achieved by ensuring that the closure plate has through-holes via which fluid can flow having passed through the holes in the retainer plates. Such through holes could be disposed radially outwardly relative to the closure plate O-ring 118 in, for example, the upper annular surface 150 of the closure plate 103.

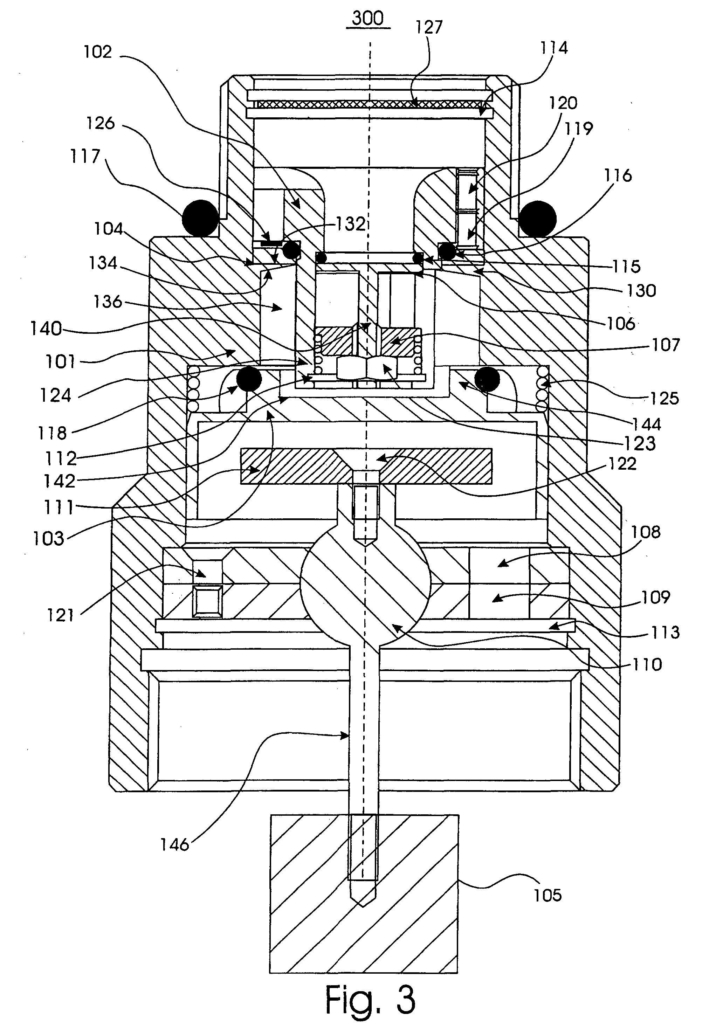

Referring to figure 3 there is shown a second embodiment of a pressure relief valve 300. Features that are common to both the first embodiment shown in figures 1a and 1b and the second embodiment shown in figure 3 have the same reference numeral and same function and will not be described in detail. Only those features that are not common to both of the embodiments will be described in detail.

Figure 3 shows a second embodiment of a pressure relief valve assembly 300 comprising a roll-over mechanism. The valve assembly 300 comprises a valve body 101 housing a valve plunger 102 that is slidingly moveable along a longitudinal axis within a neck 130 of the valve body 101. It can be appreciated, as compared to the first embodiment shown in figures 1a and 1b that the neck 130 of the second embodiment is significantly shorter than the neck of the embodiment shown in figure 1a and 1b The neck 130 is defined by an upper annular surface 132 which supports the valve seat 104, and an internal annular shoulder 134. The internal annular shoulder 134 is arranged to form within the valve body 101 a cylindrical volume 136. The cylindrical volume 136 provides a significantly greater volume through which fluids can be vented in the event of a build up of pressure as compared to the corresponding cylindrical volume of the first embodiment shown in figures 1a and 1b.

It will be appreciated that as, for example, gas is vented via the vent holes 138 a pressure difference will be created between the cylindrical volume defined by the valve body internal walls in the vicinity of the vent holes 138 which leads to the exterior of the valve body and the volume defined by the dependent skirt of the closure plate 103. In such circumstances, there is a risk that the closure plate 103 may be lifted, or if temporary closed, subsequently held closed, as a consequence of the pressure differential and inadvertently close the valve, that is, the venting action may be impeded. Any such closure of the valve or prevention of the venting action would lead to a continued increase in pressure with possible dangerous consequences. As the pressure increases, the closure plate would be urged more forcefully into the closed position. Accordingly, an embodiment provides a spring 125, which is, preferably, in the form of a three peak wave spring, coil spring or leaf spring, that is arranged to urge the closure plate 103 into the open position such that venting can be maintained regardless of the pressure differential between the gas in the vicinity of the dependent skirt of the closure plate 103 and the gas in the vicinity of the vent holes 138 which arises during venting.

It can be appreciated from figure 3 that the valve plunger 102, again, comprises a compressed spring 124 that co-operates with the seal plate 106 and circlip 112 to seal the channel through the valve plunger 102 from the exterior of the valve to the interior of the valve. The stem 140 that carries the seal plate 106 is significantly longer than the corresponding stem in the embodiment shown in figures 1a and 1b.

As a consequence of the longer stem 140 a cylindrical recess 142 has been formed in the head 144 of the closure plate 103. The cylindrical recess 142 is arranged to accommodate the lower portion of the valve plunger 102 in the closed position when the roll-over mechanism has been actuated to close the valve.

It will be appreciated that the mass of the closure plate 103 of the second embodiment, for the same material, will be less than the mass of the closure plate 103 shown in, for example, figure 1b

The pendulum 105 of the second embodiment is, preferably, cylindrical and, preferably, suspended from a substantially longer pendulum stem 146 as compared to the first embodiment shown in figures 1a and 1b. The substantially longer pendulum stem provides a greater turning moment to actuate the pivot plate.

Preferably, the materials from which the valve body 101 and the closure plate 103 are manufactured are such that there is a relatively low frictional coupling between those materials.

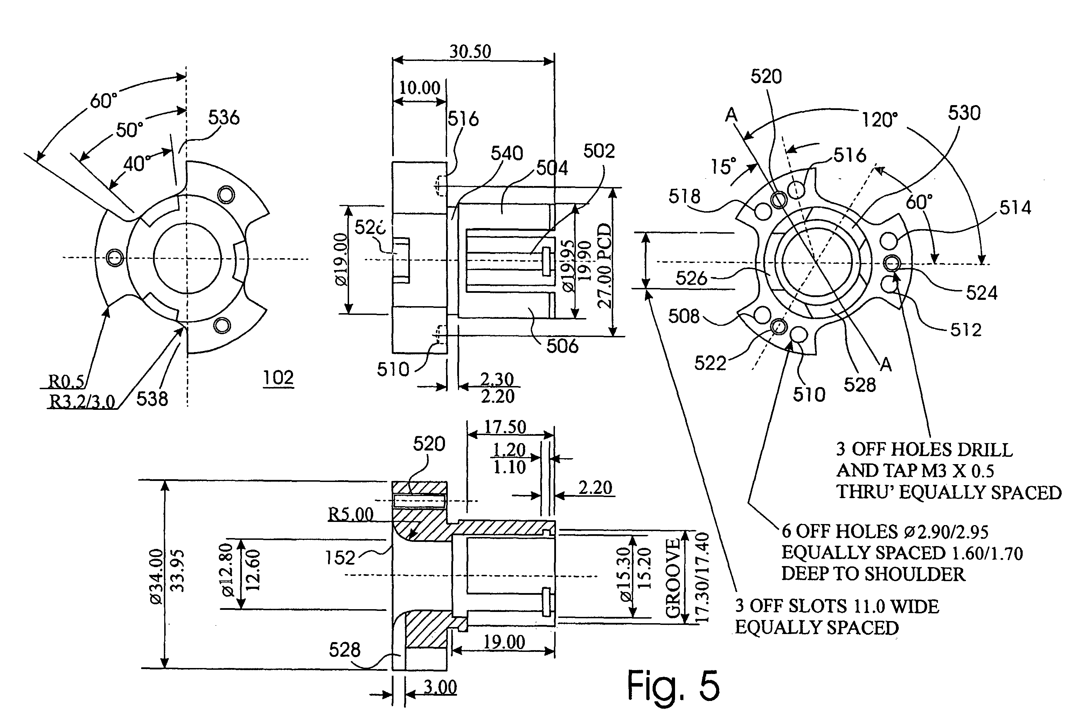

Referring to figure 5 there are shown various views of the valve plunger 102. The valve plunger is shown in figure 5 in various plan, bottom, side and sectional views. It can be seen that the valve plunger 102 comprises 3 axially extending arms 502, 504 and 506. One end of each of the axially extending arms 502 to 506 comprises an internal groove to accommodate the circlip 112. The radially extending arms define a channel which accommodates the seal plate 106 that is carried by the corresponding shaft 140. The shaft bears at the other end an adjuster plate 107 on a threaded portion of the shaft 140. The adjuster plate comprises a lip for engaging one end of a spring 124. The spring 124 cooperates with the circlip 112 to urge the seal plate 106 against a corresponding O-ring 115. A lock nut 123 is used to secure the position of the adjuster plate 107 on the shaft 140. Securing the position of the adjuster plate 107 on the shaft 140 sets the degree of force with which the seal plate 106 is urged against the corresponding seal 115. The channel defined by the arms 502 to 506 of the valve plunger 102 together with the seal plate 106, shaft 140, adjuster plate 107, spring 124, lock nut 123 and circlip 112 constitute an arrangement, for example, drainage means and/or vacuum release means, by which either fluid can be drained from a tank having a valve according to an embodiment of the present invention or by which a build up of vacuum in a tank having a valve according to an embodiment of the present invention can be relieved.

For example, an appropriately shaped plunger such as, for example, a narrow rod, may be used to urge the seal plate 106 away from the corresponding O-ring 115 which will in turn urge the closure plate 103 into the open position to allow drainage of fluid via the vent holes 138. Alternatively, or additionally, should a vacuum be created within the tank having a valve according to an embodiment of the present invention, for example, during drainage of the tank by some other outlet, the pressure differential between the interior of the tank and the external surrounding environment, if sufficiently great, may also cause the seal plate 106 to break the seal with the O-ring 115 to redress the pressure differential. It can be appreciated that the force required to urge the seal plate 106 away from the O-ring 115 can be set by appropriate selection of the spring 124 and the position of the adjuster plate 107 on the shaft 140.

Referring to figure 5 again, it can be seen that there are six, 0.29 mm diameter, equally spaced holes 508 to 518 which are arranged to accommodate the magnets 126. The remaining holes 520, 522 and 524 are internally threaded and arranged to accommodate respective adjuster screws 119 and locking screws 120. The internal bore of the plunger has a diameter of 12.8 mm which opens up to a diameter of substantially 22.8 mm by way of a 5 mm radius. The externally facing face 152 of the valve plunger 102 comprises three radially directed slots 526, 528 and 530 which are designed to improve fluid flow. Each of the radially directed slots 526 to 530 are substantially radially aligned with three circumferentially disposed recesses 532 to 538. Preferably, the recesses 532 to 538 subtend an angle of 60° each. Preferably, each axially extending arm 502 to 506 subtends an angle of 40°. In an embodiment, the angle between the start of a recess and a remote face of a axially extending arm is typically 50°. The valve plunger comprises a 0.2 mm neck 540 that is arranged to accommodate a corresponding O-ring 116. The circlip 112, which co-operates with the compressed spring 124 and the adjuster plate 107 sets the force required to urge the seal-plate 106 into the open position is accommodated via corresponding grooves in the inwardly directed face of the axially extending arms 502, 504 and 506. The grooves have an internal diameter of 15.3 mm and an external diameter of 17.3 mm. Preferably, the grooves have a width of 1.2 mm and are disposed at a distance of 2.2 mm from one end of the axially extending arms 502 to 506. The length of the inwardly facing portion of the axially extending arms 502 to 506 is 17.5 mm. The length of the outwardly facing portion of the axially extending 502 to 506 is 19 mm.

In a preferred embodiment, the closure plate 103 is manufactured from brass. Alternatively, the closure plate may be manufactured from a light aluminium alloy.

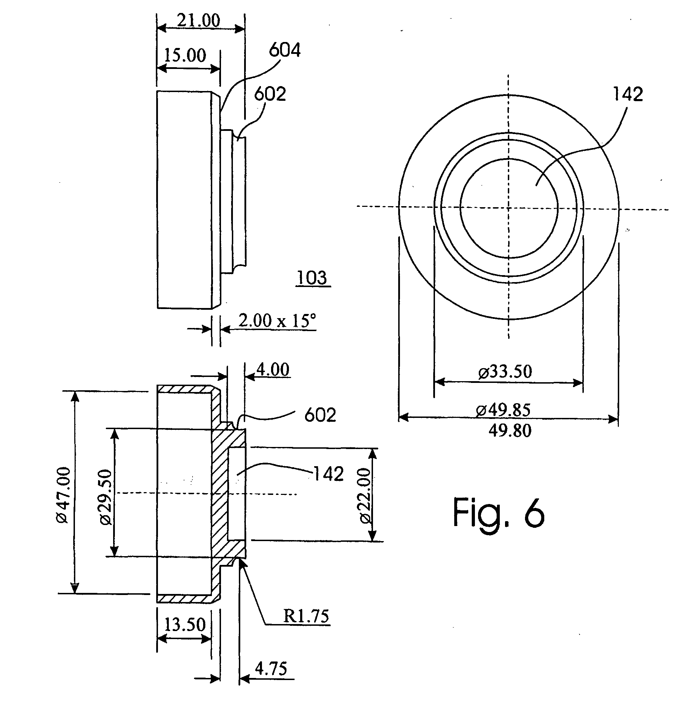

Figure 6 shows a second embodiment of the closure plate 103. It can be seen that the closure plate 103 is provided with a recess 142 to accommodate the lower portion of the valve plunger 102 in the closed position. An annular groove 602 is provided to accommodate the O-ring 118. Preferably, the radius of the annular groove 602 is 1.75 mm. The outer diameter of the annular groove 602 is 33.5 mm. An embodiment of the closure plate 103, preferably, has a recess depth of 4 mm and a recess diameter of 22 mm. The inner diameter of the dependent skirt is 47 mm. The internal depth of the dependent skirt is 13.5 mm. The outer diameter of the dependent skirt is 49.85 mm. The distance from the shoulder 604 which bears the dependent skirt to the bottom of the dependent skirt is 15 mm. The overall height of the closure plate 103 is 21 mm. Preferably, the pendulum stem 146 is at least 20 mm in length.

It can be appreciated that the pressure differential that arises during venting is related to the velocity of the fluid when venting. The velocity of the fluid during venting can be varied according to the number and size of the vent holes 138. As the venting area provided by the vent holes increases, the velocity of the venting fluid decreases.

Optionally, to address the problem of the creation of a pressure differential during venting between the volume above the closure plate 103 and the volume below the closure plate, holes may be included in the upper surface of the closure plate such as the holes disposed radially outwardly relative to the O-ring 118.

The channel via which venting occurs in the second embodiment has a greater volume as compared to the corresponding channel in the first embodiment. Such a difference in channel volume allows the valve according to second embodiment to vent more rapidly.

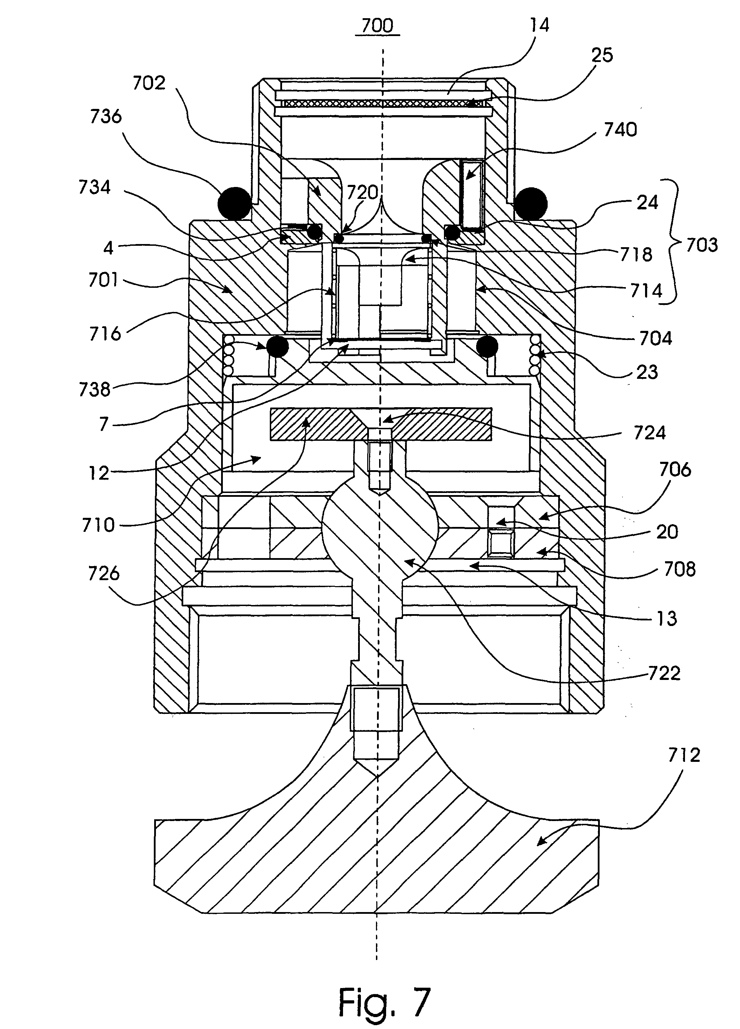

Referring to figure 7 there is shown a sectional view of a third, preferred, embodiment of a pressure relief valve assembly 700. It can appreciated that the third embodiment has much in common with the first and second embodiments. Common features perform substantially the same function and will not be described in detail in relation to the third embodiment for the sake of brevity. However, the substantial differences between the third embodiment and the first and second embodiments will be described hereafter in detail. A brief comparison between the first and second embodiments and the third embodiment shows that the principle differences relate to, for example, the valve plunger, closure plate, the pendulum and pivot and the vacuum plate.

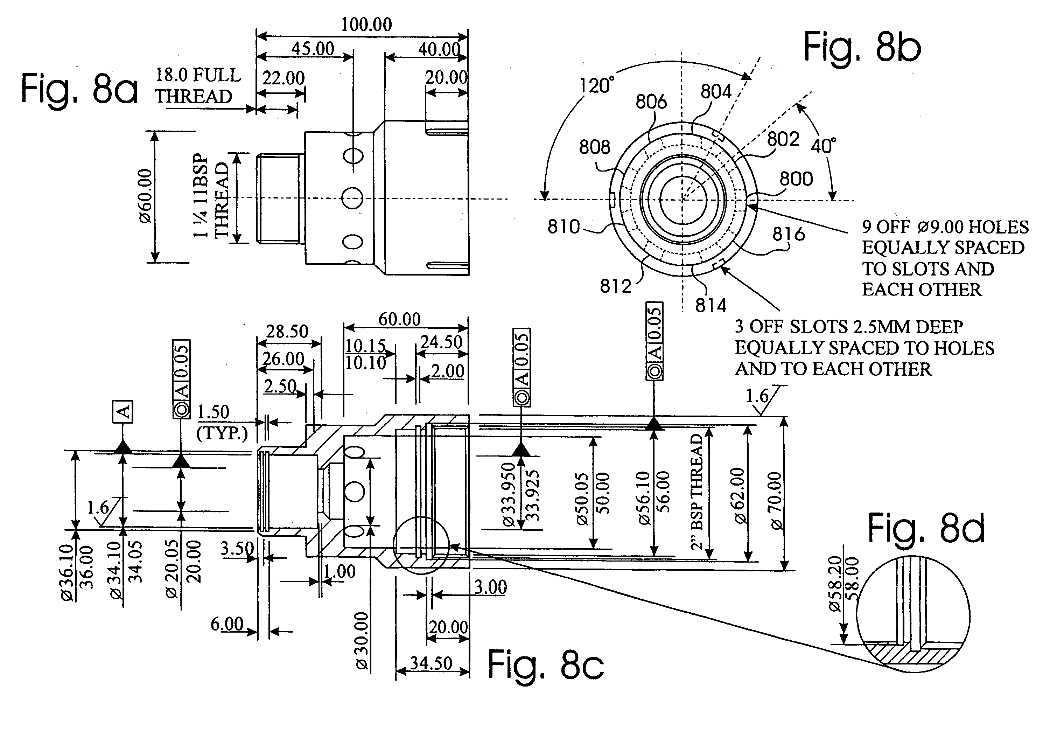

The valve assembly 700 comprises a valve body 701 housing a valve plunger 702 that is slidingly moveable along a central longitudinal axis within a throat of the valve body 701. It can be appreciated that the throat or the interior of the throat portion 703 of the third embodiment has been broadened relative to the first embodiment. The internal throat portion 703 comprises a 30mm internal bore section 704 (in contrast to the 25.4mm internal bore section of the first embodiment). To reduce the velocity of a fluid during venting or drainage, nine 9mm diameter through-holes are radially disposed at equal circumferential spacing in the valve body 701. The nine holes can be seen more clearly in figures 8a, 8b and 8c. It can be seen that the nine 9mm diameter holes 800 to 816 allow a greater volume of fluid to be vented at a reduced velocity of flow as compared to the first and second embodiments. The reduced velocity of flow assists in reducing the pressure differential, if any, during venting between the internal volume defined by the interior of the valve body and the top of the closure plate 710 and the volume beneath the closure plate.

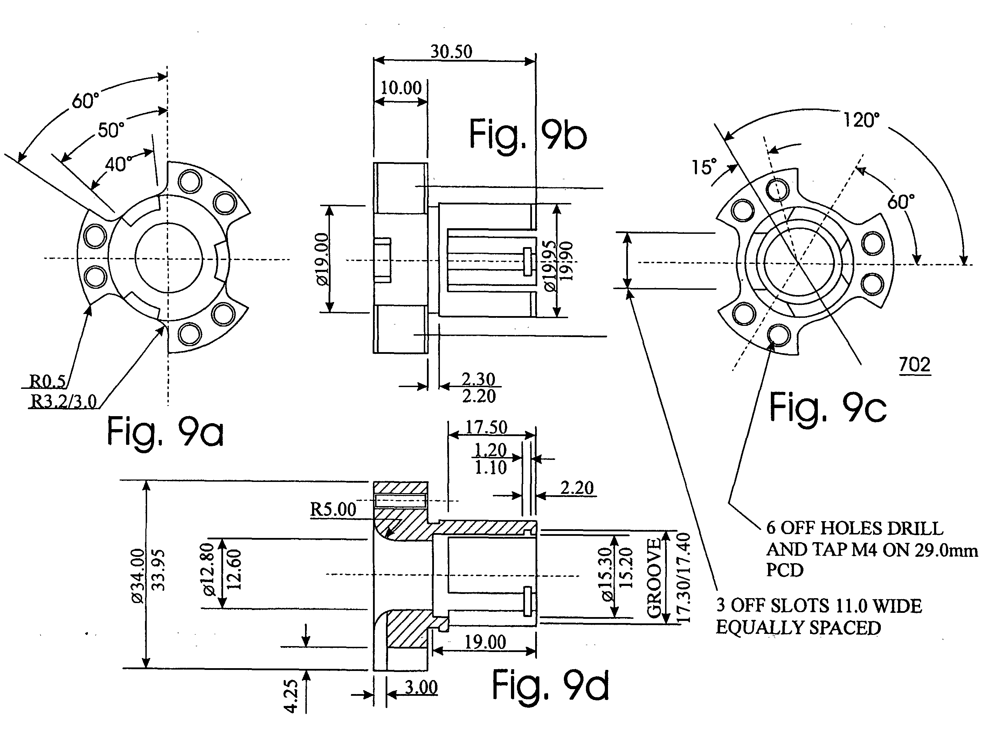

Referring to figures 9a to 9d, there is shown various views of a valve plunger 702. The valve plunger of the third embodiment is shown for completeness, as it is identical in construction and dimensions to the valve plunger described above in relation to the first and second embodiments.

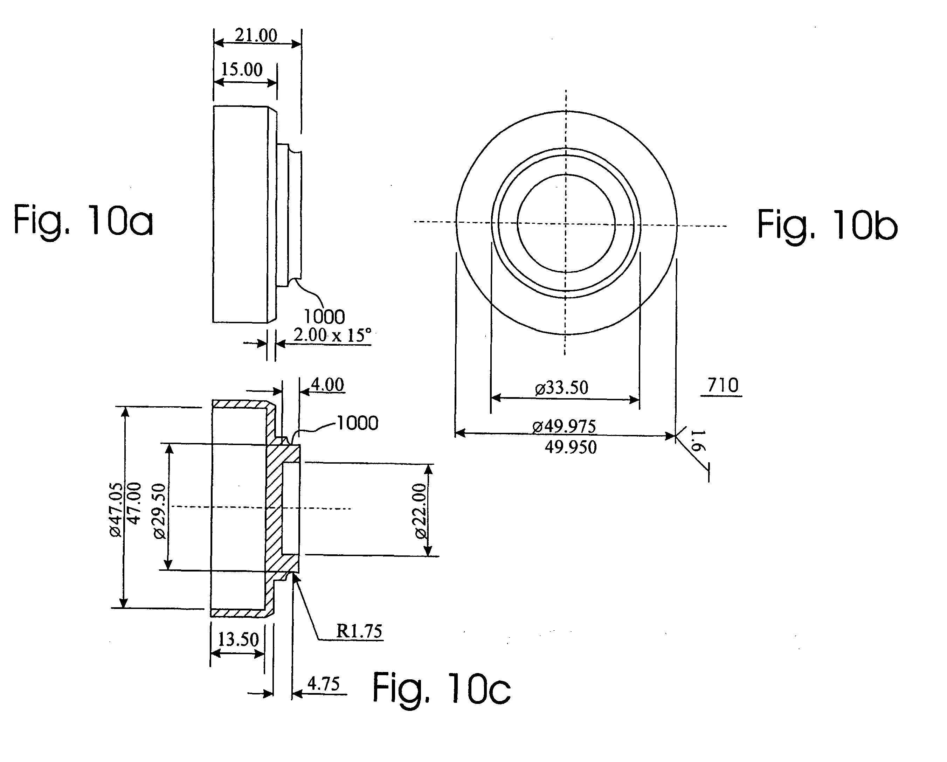

Figures 10a to 10c show a closure plate or closing piston 710 of the third embodiment. Again, it can be appreciated that the piston 710 of the third embodiment is substantially identical to the above described closing plate or closing piston.

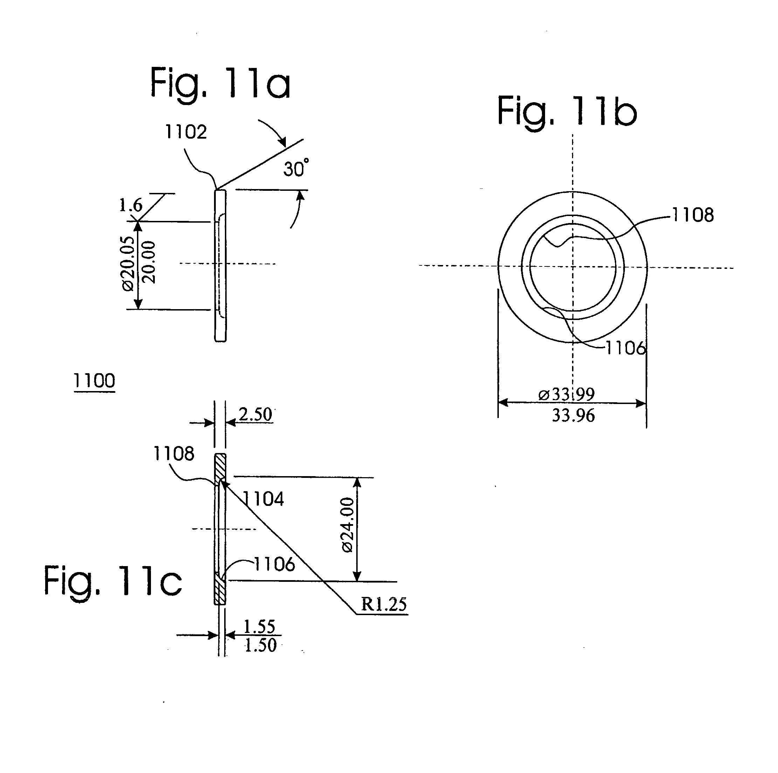

An embodiment of a valve seat 1100 as shown in figures 11a to 11c. The valve seat 1100 has an outer diameter of between 33.96mm and 33.99mm. One circumferential edge 1102 has a chamfer of 30°. The thickness of the valve seat 1100 is 2.5mm. The valve seat 1100 comprises, when viewed from one side, a 24mm diameter opening 1104 which leads, via a radial shoulder 1106 of radius 1.25mm, to a narrow throat section 1108. The depth of the radial shoulder portion 1106 is between 1.5 mm and 1.55 mm from the plane of the 24 mm diameter opening 1104. Preferably, the material from which the valve seat is manufactured complies with material specification 431S29, in BS970, Part 1, 1983.

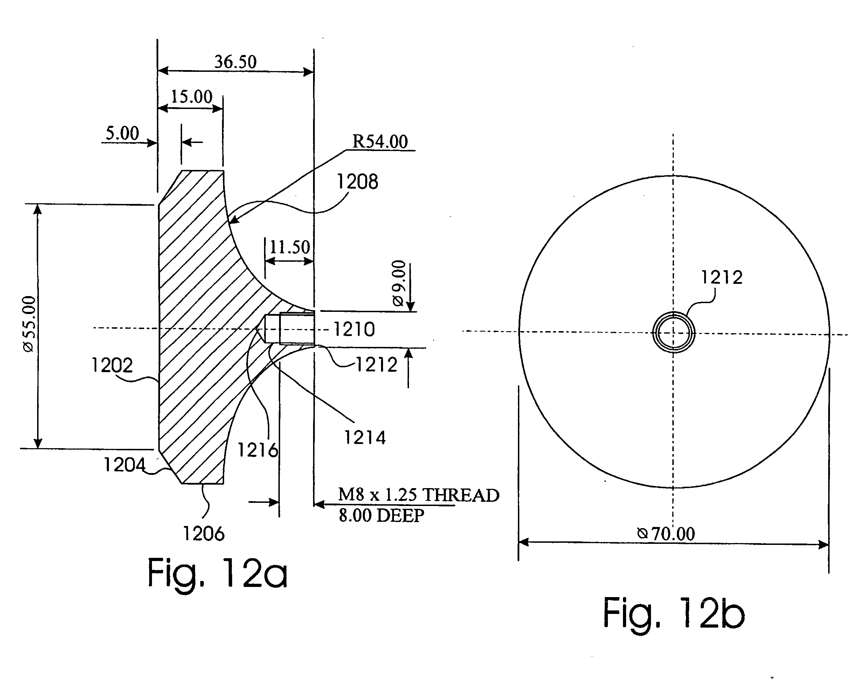

Referring to figures 12a and 12b, there is shown a pendulum or roll-over weight 712 for the third embodiment shown in figure 7. It can be seen from the cross-section of figure 12a that it has a height of 36.5mm and a circular base 1202 of diameter 55mm which extends via a frusto-conical surface 1204, having longitudinal depth of 5mm, to an outer circumferential wall 1206 having a 70mm diameter. A circumferential radial shoulder 1208 of radius 55 mm extends from the circumferential wall 1206 to a threaded blind bore 1210 via a 1m wide annulus 1212. The threaded portion of the bore is 8mm deep and bears a M8x 1.25 thread. The bore continues, via an unthreaded portion, to a depth of 11.5mm and is closed via a conical surface 1216.

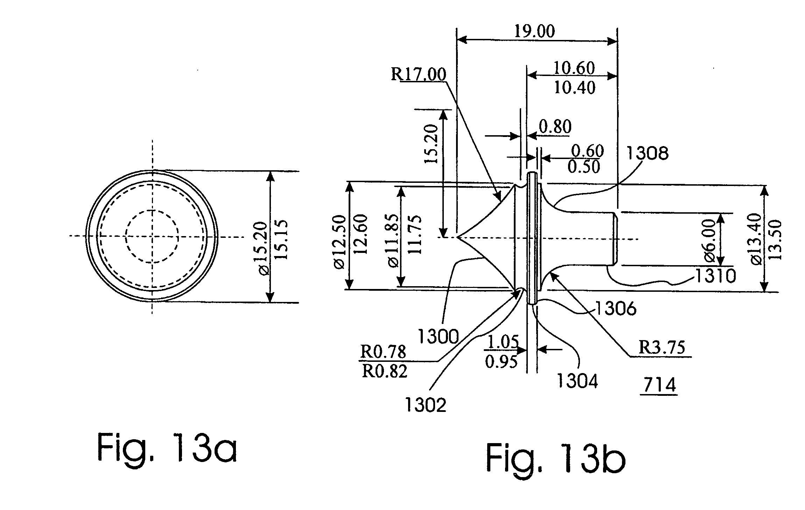

Referring to figures 13a and 13b there is shown an embodiment of a vacuum plate 714 for the third embodiment of the valve assembly of figure 7. The vacuum plate 714 comprises an outwardly directed circumferential curved portion 1300 having a radius of 17mm. An O-ring receiving portion having an inwardly directed radius 1302. Preferably, the radius of the O-ring receiving portion 1302 is between 0.78 and 0.82 mm. The O-ring receiving portion leads to a cylindrical portion 1304 having an internal shoulder 1306 for bearing a spring 716 as shown in figure 7. The shoulder 1306 as defined by an annular surface of the cylindrical portion 1304 and a further cylindrical portion of radius 13.4 to 13.5mm and depth of 0.5 to 0.6 mm. The further cylindrical portion narrows via a 3.75mm radiused section 1308 to form a still further cylindrical portion 1310 having a diameter of 6mm. The overall length of the vacuum plate 714 is 19mm. The thickness of the first cylindrical portion 1304 is between 0.95mm and 1.05mm. The distance between an edge of the first cylindrical portion 1304 and the centre of curvature of the O-ring receiving portion 1302 is 0.8mm. The diameter of the curved portion 1300 is between 12.5 and 12.6mm. The O-ring receiving portion 1302 has an internal or an inner most diameter of between 11.75mm and 11.85mm. The diameter of the first cylindrical portion 1304 is between 15.15mm and 15.2mm.

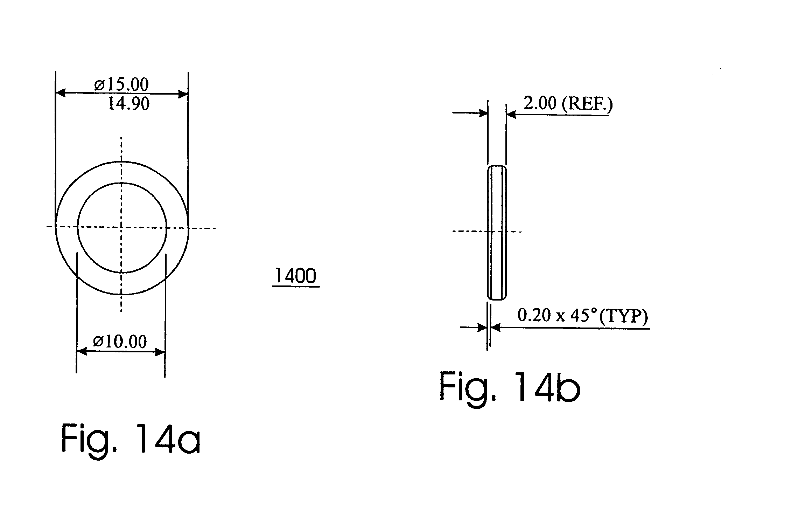

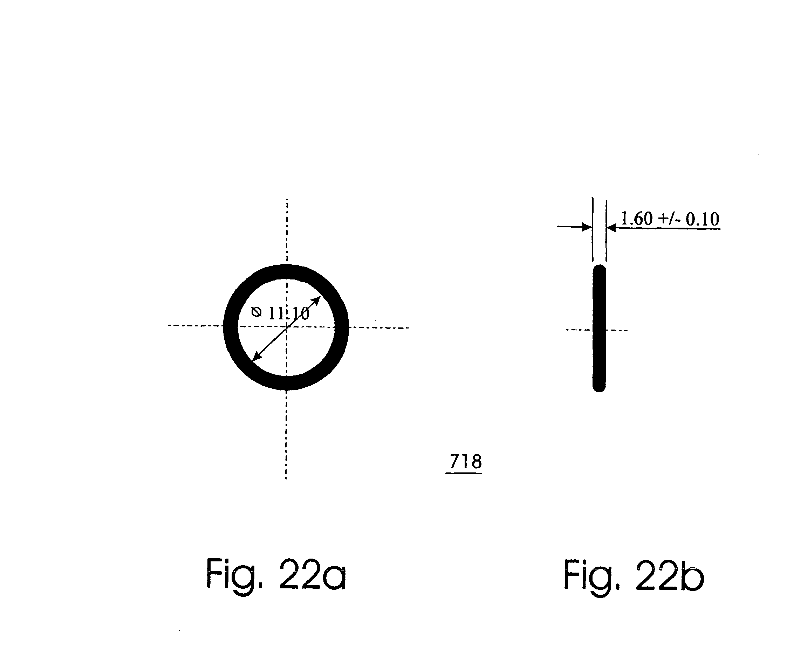

Referring to figures 14a and 14b there is shown a shim 1400 having, in an embodiment, a thickness of 2mm, an internal diameter of 10mm and an external diameter of 14.9 to 15mm. The edges of the shim have a 0.2mm x 45° chamfer. The thickness of the shim is arranged in conjunction with the spring 716 to set the force with which an O-ring 718 (described hereafter with reference to figures 22a and 22b is urged against a corresponding internal shoulder 720 of the valve plunger 702). To increase or decrease the force with which the O-ring 718 is urged against the internal shoulder 702 either the spring constant can be increased or decreased and/or the thickness of the shim can be increased or decreased respectively.

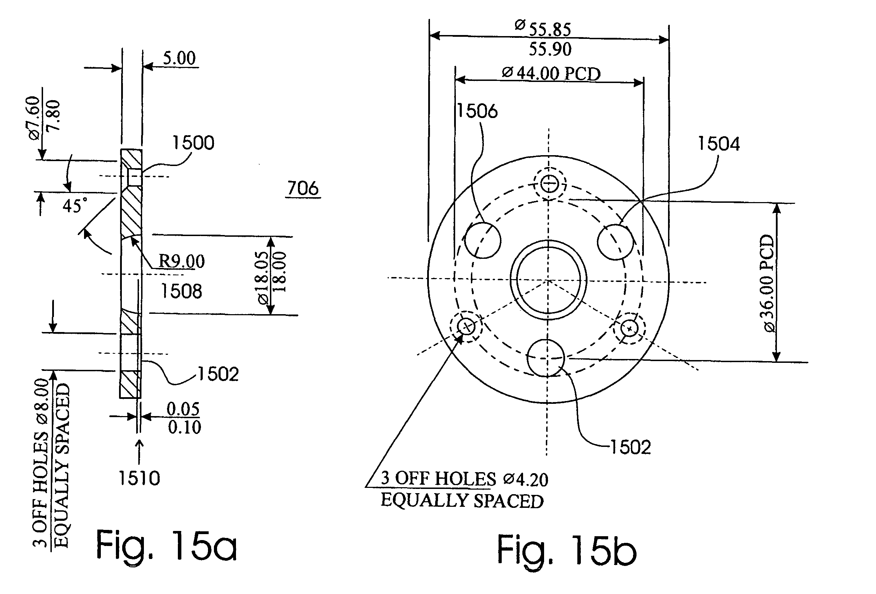

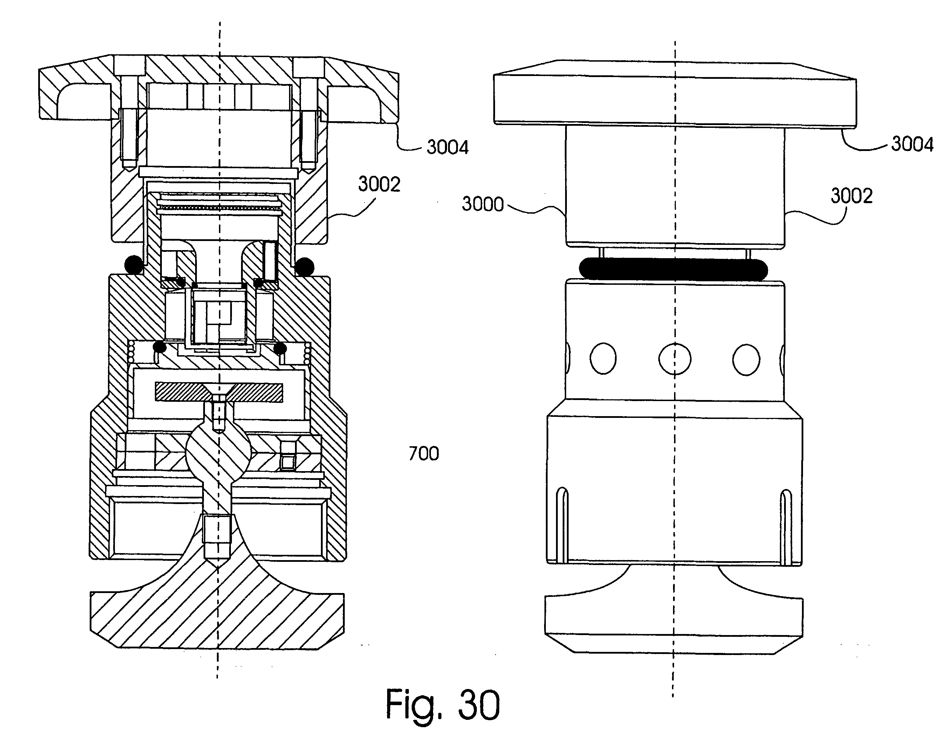

Figures 15a and 15b show sectional and plan views respectively of the retainer plate 706. The retainer plate can be coupled to the retainer base 708 by three corresponding retainer screws which have 7.6 mm to 7.8mm 45° counter sunk section. The retainer plate 706 has three equally spaced 8mm through holes 1502 to 1506 which allow equilibrium pressure to be achieved in the internal volumes between above and below the retainer plate and retainer base. The retainer plate 706 has a pivot receiving portion 1508 which narrows from a first diameter of between 18 mm and 18.05 mm to a second diameter via a 9.0mm radius having a centre that is disposed at a distance of 0.05 to 0.01 mm from a first plane 1510 of one side of the retainer plate 706. The thickness of the retainer plate is 5 mm. The three equally spaced 8mm through holes are centred on a circle having a diameter of 36mm. The threaded portions 1500 for receiving the retainer screws (described hereafter with reference to figures 30a and 30b) are centred on a circle having a diameter of 44mm. The diameter of the retainer plate is between 55.85mm and 55.9mm.

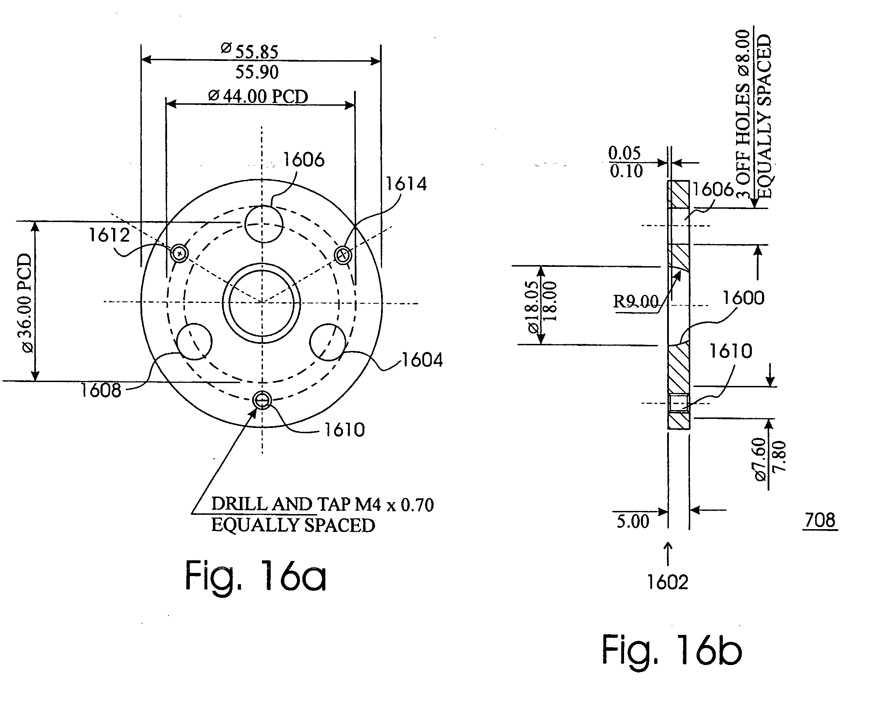

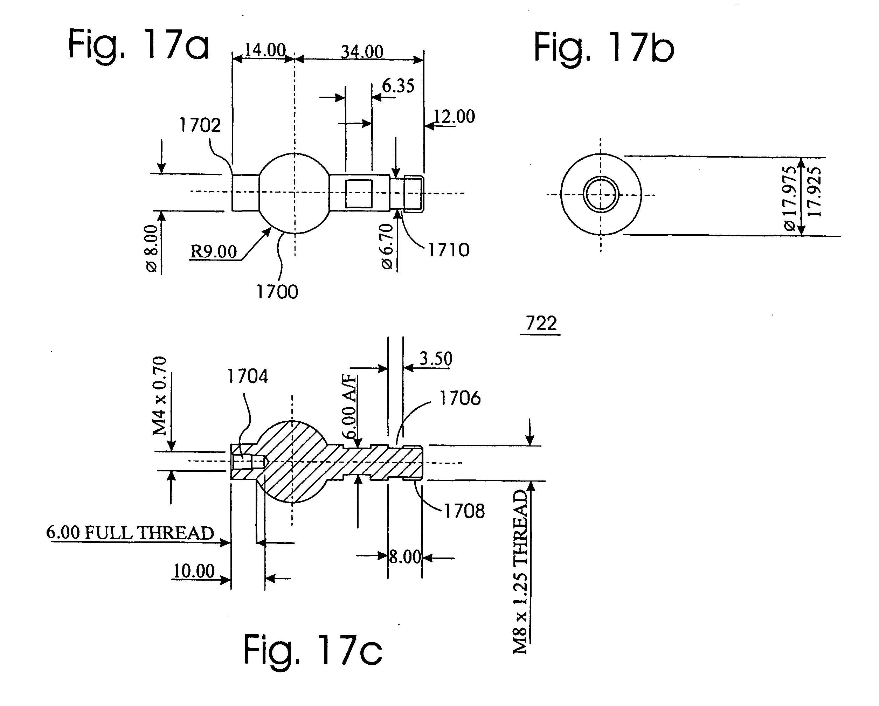

Figures 16a and 16b show plan and sectional views respectively of the retainer base 708. The retainer base 708 is arranged to co-operate with the retainer plate 706 to form an enclosure for the ball of the pivot (described hereafter with reference to figures 17a and 17b). Accordingly, the retainer base 708 has a correspondingly dimensioned 9mm radius internal shoulder 1600 having a centre at 0.05mm to 0.1mm from a first plane 1602 of the retainer base 708. The retainer base 708 comprises three equally spaced 8mm diameter through holes 1604 to 1608 that are arranged to register with the corresponding holes 1502 to 1506 of the retainer plate 706. The retainer base 708 also comprises three equally spaced M4x0.7 drilled and tapped retainer screw threaded internally threaded bores 1610 to 1614.

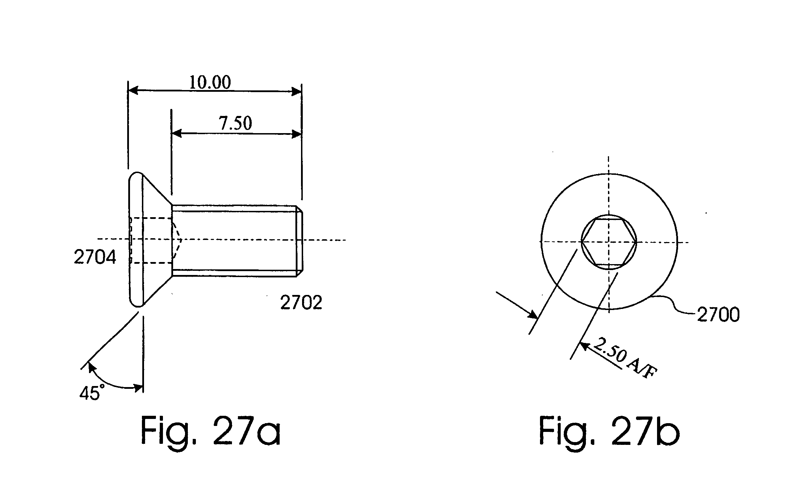

Figures 17a to 17c show side plan and sectional views of an embodiment of the pivot 722. The pivot comprises a substantially spherical ball portion 1700 having a radius of 9mm. The ball section is received or retained in the volume defined by the internal shoulders of the retainer plate and the retainer base 1508 and 1600 respectively. The substantially spherical portion 1700 has a centre which is located a distance of 14mm from a first end 1702 of the shaft. The first end 1702 of the shaft comprises an internally threaded or fully threaded bore 1704. Preferably, the internally threaded bore extends a distance of 6mm into the bore and is M4x0.7 threading. The bore preferably extends a distance of 10mm into the shaft. The internally threaded bore 1704 is arranged to receive a screw 724 (described hereafter with reference to figures 27a and 27b) to retain the closure or pivot plate 726 in place. The other end 1706 of the shaft comprises an externally threaded portion 1708 having a M8x1.25 thread, which extends over a distance of 4.5mm. The diameter of the shaft is 8mm. The outer diameter of the substantially spherical portion or ball 1700 is between 17.925 and 17.975mm.

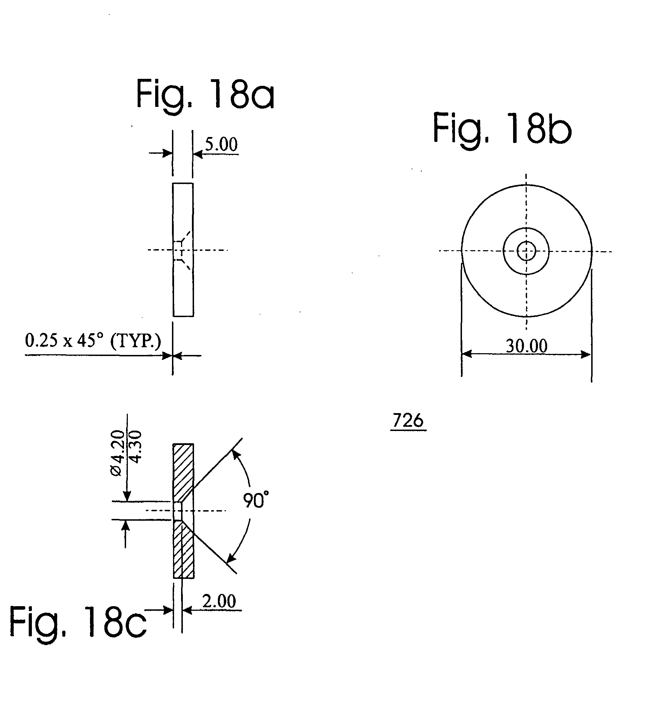

Figures 18a to 18c show an embodiment of the pivot plate 726 for the third embodiment of the valve assembly. The pivot plate 726 has an outer diameter of 30mm and a concentric through hole of between 4.2 and 4.3 mm of a 2mm depth. The through hole opens up via a 90° countersunk portion. The thickness of the pivot plate is 5mm. The cylindrical edges of the pivot plate are preferably provided with a 0.25 x 45° chamfer.

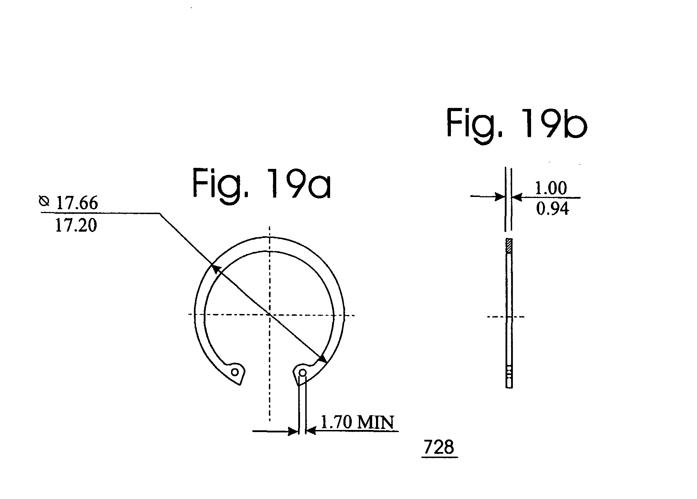

Referring to figures 19a and 19b there is shown plan and cross sectional views of a first internal retaining ring 728 having a diameter of between 17.2mm and 17.66mm and a thickness of between 0.94 and 1mm. The first internal retaining ring is preferably manufactured from spring steel and finished with zinc and yellow. It can also be appreciated that there are provided two locating holes for circlip pliers.

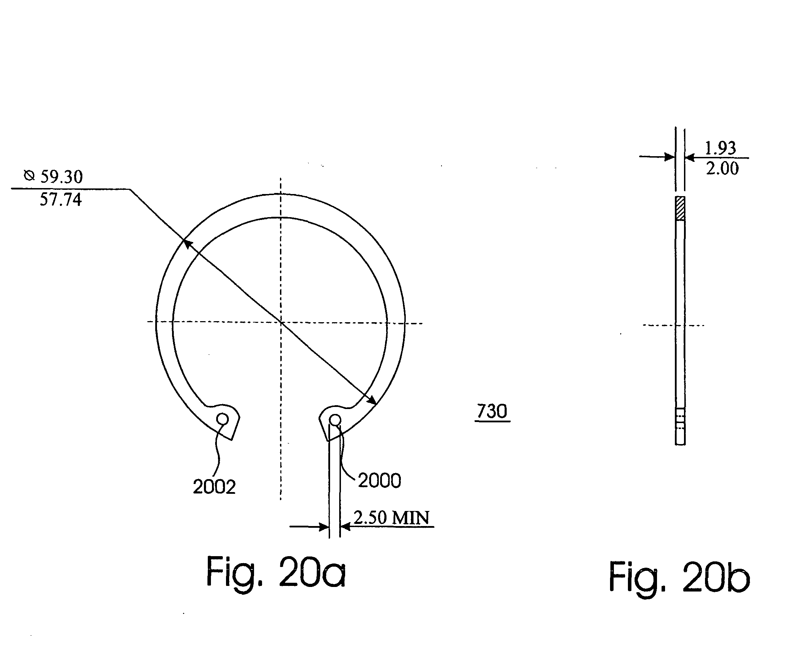

Referring to figures 20a and 20b there is shown plan and sectional views of a 54mm second internal retaining ring 730 having a diameter of between 57.74mm and 59.3mm, a thickness of between 1.93mm and 2.0mm and a pair of 2.5mm diameter locating holes 2000 and 2002 for circlip pliers.

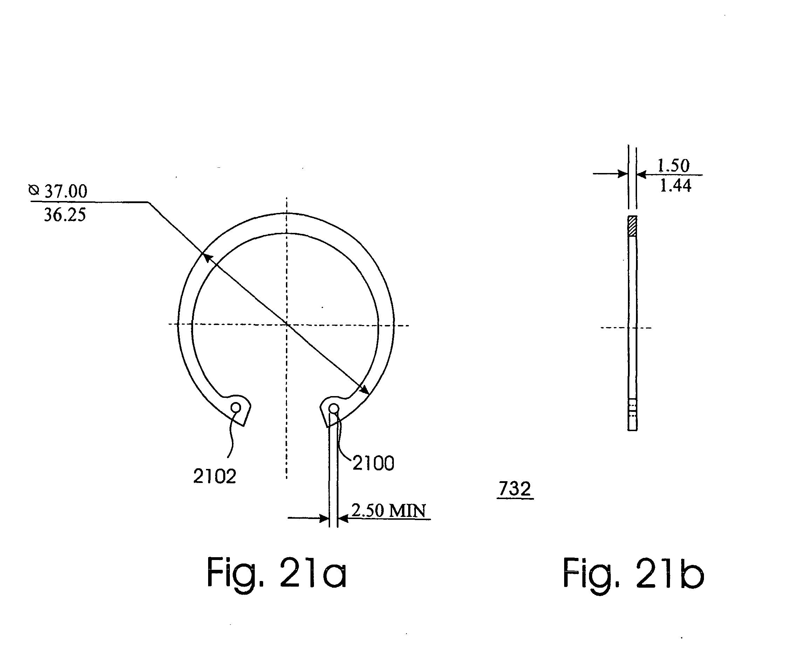

Figures 21a and 21b show a 34mm third internal retaining ring 732 having a diameter of between 36.25mm and 37mm, a thickness of between 1.44 and 1.5mm and two 0.25mm minimum diameter locating holes 2100 and 2102. Preferably, the third internal retaining ring 732 is manufactured from spring steel having a hardness of.47-54 Rc and is finished in zinc and yellow.

Figures 22a and 22b show an embodiment of the first O-ring 718 having an internal diameter of 11.1mm and an thickness, or cross sectional diameter, of 1.6 mm +/-0.1mm. Preferably, the O-ring is manufactured from VITON.

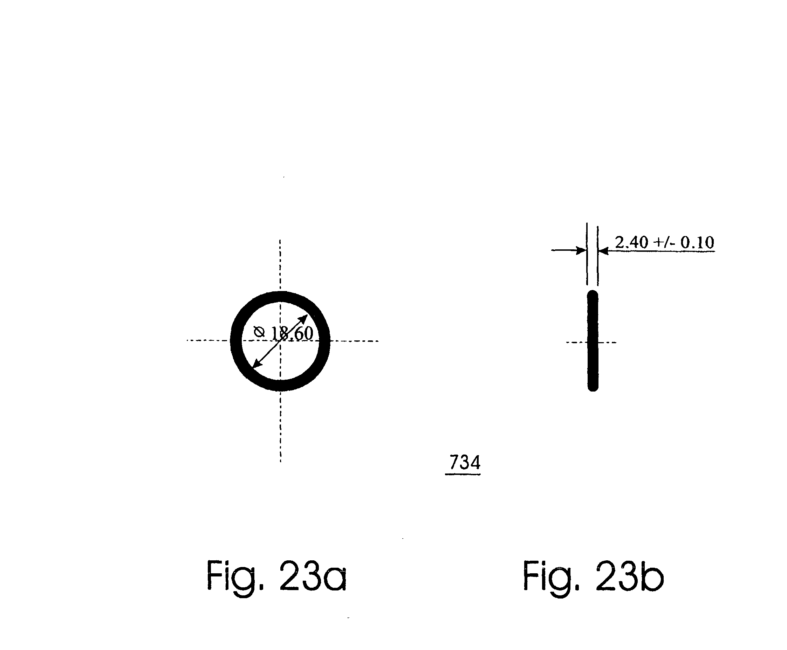

Figures 23a and 23b show an embodiment of a second O-ring 734 having an internal diameter of 18.6mm and a thickness, or cross sectional diameter, of 2.4mm +/-0.1mm. Preferably, the O-ring is manufactured from VITON.

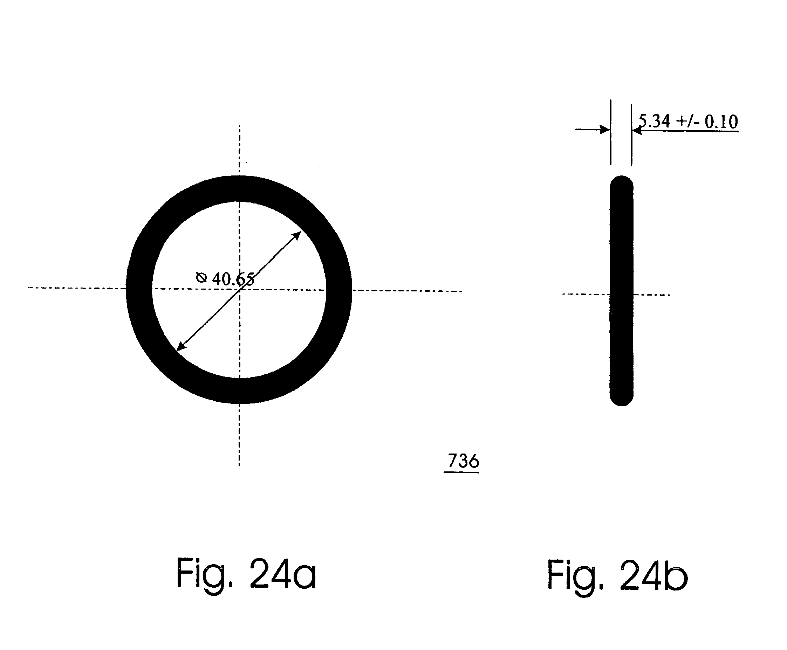

Figures 24a and 24b show an embodiment of a third 0-ring 736 having an internal diameter of 40.65mm and a thickness, or cross sectional diameter, of 5.34mm +/-0.1mm. Again, the O-ring 736 is preferably manufactured from VITON. The O-ring 736 is used to form a seal between the valve assembly and a body incorporating the valve. The second O-ring 734 is arranged to be received in the internal shoulder 1106 of the valve seat.

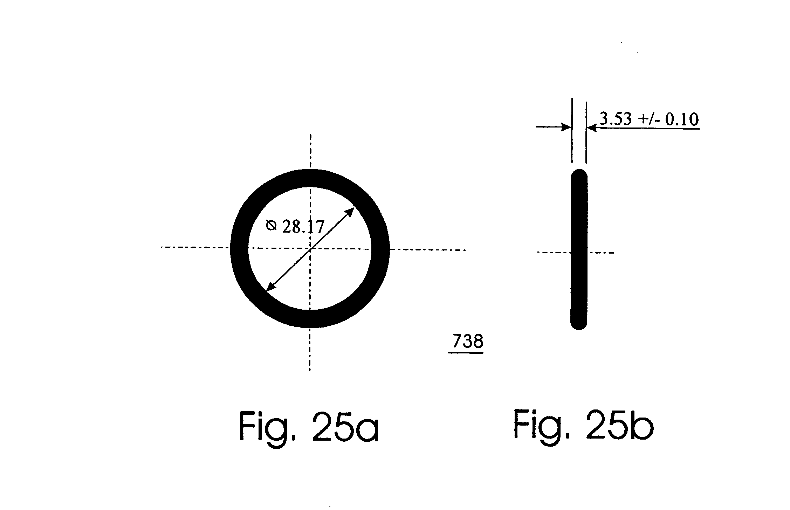

Referring to figures 25a and 25b there is shown an embodiment of a fourth O-ring 738 and that is arranged to be received via the 1.75mm radius recessed portion 1000 of the closing piston 710. The fourth O-ring 738 has internal diameter of 28.17mm and a thickness, or cross sectional diameter, of 3.53 +/-0.1mm. Preferably, the fourth O-ring 738 is manufactured from VITON.

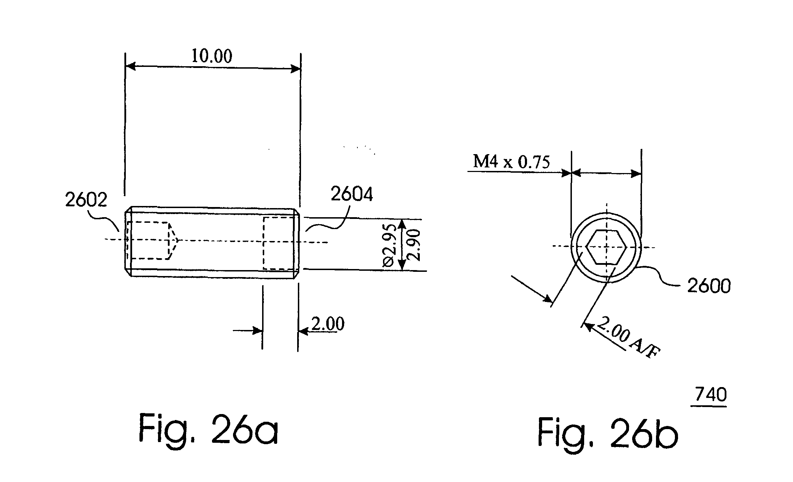

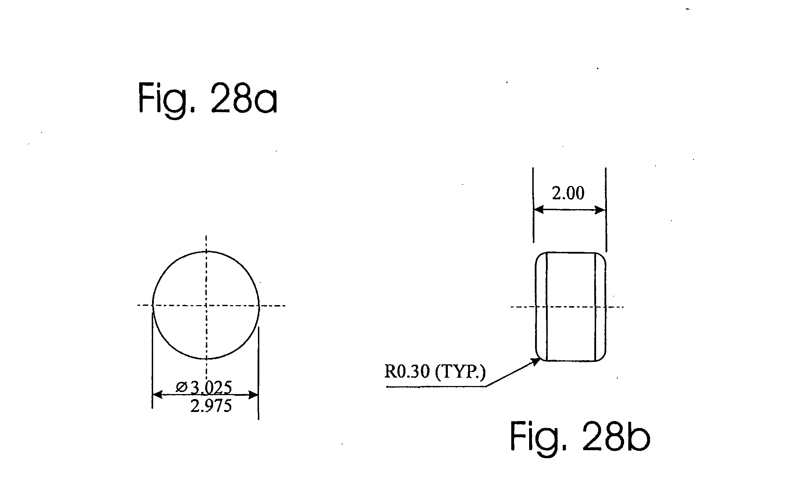

Figures 26a and 26b show side and end views of an embodiment of an adjuster screw 740. The adjuster screw has an overall length of 10mm, a diameter 4mm and bears a hole having a diameter of 2.9 to 2.95mm. The adjuster screw bears a M4x0.75 outer threaded portion 2600. A first end 2602 of the adjuster screw 740 comprises a 2mm A/F for receiving a suitably dimensioned Allen key to adjust the position of the adjuster screw within the valve plunger 702. The second end 2604 of the adjuster screw 740 comprises a 2.9 mm to 2.95 mm bore for receiving a suitably dimensioned magnet (which is described hereafter with a reference to figures 28a and 28b). The adjuster screw is used to set the distance of the magnets from the valve seat and thereby determining the force with which, under equilibrium conditions, the valve plunger is urged towards the valve seat 104.

Referring to figures 27a and 27b there is shown side and end views of the various retaining screws that are used to secure together the retainer plate and retainer base 706 and 708 and to couple together the pivot 722 and the pivot plate 726. The retainer screw comprises a 2.5mm Allen key receiving bore 2704 of depth 2.5mm. This screw has a 7.5mm threaded portion 2702 and a frusto-conical, 45°, head 2700.

Referring to figures 28a and 28b there is shown an embodiment of a magnet for location within a corresponding bore 2604 of an adjuster screw as shown in figures 26a and 26b. The magnet is cylindrical and has a diameter of between 2.975 and 0.3025 mm and a width of 2mm. The edges of the magnet are rounded via a 0.3mm radius. Preferably, the magnet is manufactured from sintered neodymium iron boron (NdfeB) and is nickel-plated.

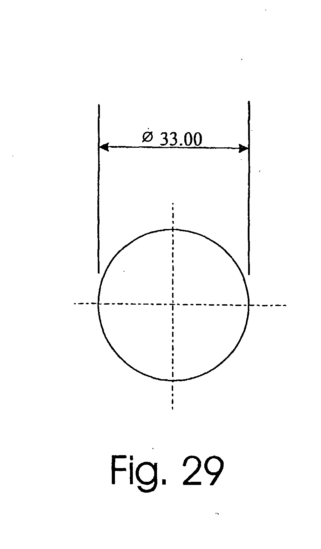

Figure 29 shows a stainless steel wire gauze having a 33mm diameter which is used as a fire protection/fire prevention mechanism in the upper or external ends of the valve assembly 700.

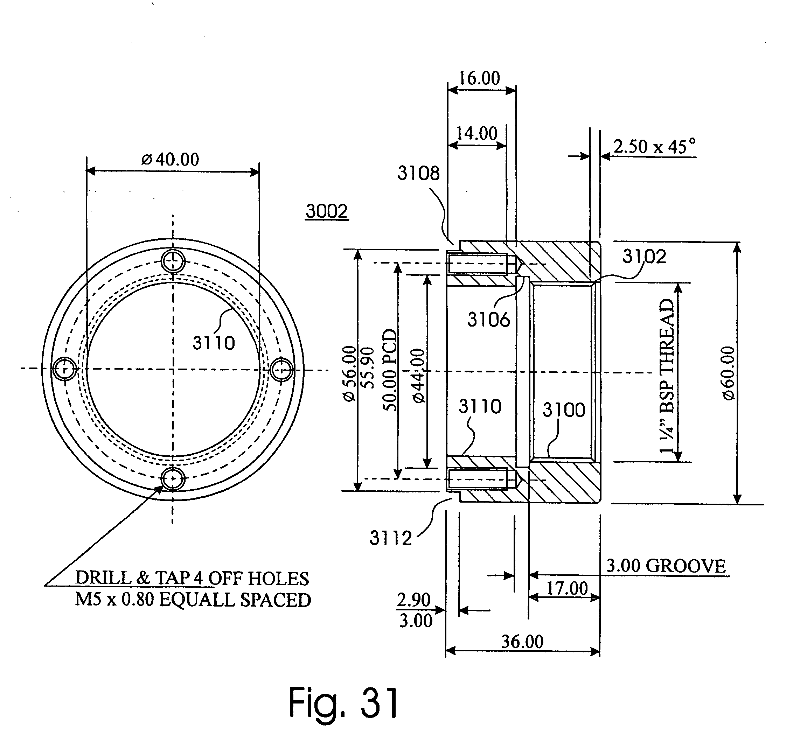

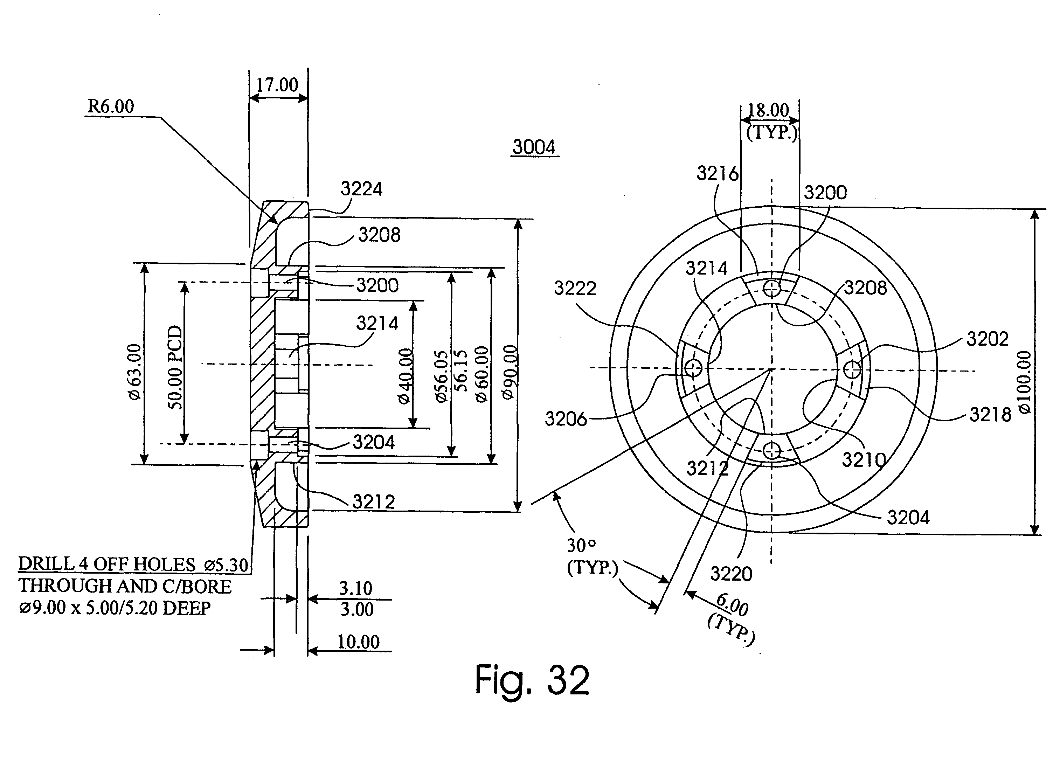

Referring to figure 30 there is shown side and sectional views of a valve assembly 700 together with a corresponding raincap 3000 which is used to prevent rain passing through the valve assembly 700 and contaminating the fluid contained within the tank to which the valve assembly is fitted. The raincap comprises a raincap body 3002 and a raincap top 3004 which are described hereafter with reference to figures 31 and 32 respectively. The rain cap body 3002 is, in use, arranged to urge via an appropriate threaded portion 3100 the third O-ring 736 against a corresponding body (not shown) to form a fluid tight seal between the valve assembly and the body. The threaded portion comprises a 1¼" BSP thread. The raincap body 3002 is cylindrical and has a 60mm diameter. The width of the raincap body is 36mm. The depth of the 1¼" BSP threaded portion 310 is 17mm. The threaded portion comprises a chamfered portion 3102 of 2.5mm x 45°. The second end 3108 of the raincap body comprises an internal 40mm diameter bore 3110. The threaded portion 3100 and the internal bore 3110 form a groove channel that extends through the raincap body 3002. The second end 3108 of the raincap body comprises 4 equally spaced M5x0.8mm threaded bores for receiving corresponding fastening bolts which, in turn, keep the raincap top secured against to the raincap body. Preferably, the second end 3108 of the raincap comprises a shoulder portion 3112 having, preferably, a depth of between 2.9mm and 3mm. The shoulder portion 3112 is arranged to receive a complementary formed stepped portion of the rain cap top.

Referring to figure 32 there is shown an embodiment of the raincap top 3004 in sectional and bottom views. The raincap top 3004 comprises 4 equally spaced through holes 3200 to 3206 which, in use, carry threaded bolts that are used to fasten the raincap top 3004 to the raincap body 3002. As can be appreciated from the sectional view, the raincap top has four equally spaced legs 3208 to 3214 which, in conjunction with the top or first end 3408 of the raincap body 3002, define fluid flow exit channels via which venting fluid can escape to atmosphere. The legs 3208 to 3214 have an internal diameter of 40mm and an external diameter of 60mm. Each leg comprises a stepped portion 3216 to 3222 that has an internal diameter of 56.05mm and an external diameter of 60mm. The raincap top 3004 has a circumferential dependent skirt 3224 having an internal depth of 10mm and an internal radius of 6mm. The overall thickness of the raincap top is 17mm. The depth of the stepped portions 3216 to 3222 is between 3mm and 3.1mm. The four holes for receiving the securing bolts are centred on a circle having a 50mm diameter. The width of each leg 3208 to 3214 is typically 18mm at the widest end.

During drainage of a tank when the roll-over mechanism has been actuated it is preferable that the raincap top is removed and for the raincap body to bear an internal thread to allow an appropriately threaded adapter, after removal of the valve plunger, to open or force the closure plate of its seat. It will be appreciated that this affords a larger flow area through which a tank can be drained.

It can be seen that the adjuster screws carrying the magnets in the third embodiment do not rely on locking screws to maintain the adjuster screws in a fixed position. In the third embodiment, a suitable alternative locking mechanism, such as lock tight, can be used. However, the third embodiment may, optionally, use such locking screws as opposed to the alternative mechanism.

Although the above embodiments have been described with reference to a pressure relief valve for use in, for example, a mobile tanker, the present invention is not limited thereto. Embodiments of the pressure relief valve can also be used within static or semi-static storage tanks.

## Claims

1. A pressure relief valve (100) for venting a fluid from a container comprising an inertially actuable roll-over mechanism, having a pendulum (105;712) and a pivot plate (111;726), arranged, in a first position of the pendulum, to urge a first closure member (103) towards a first corresponding seat to form a fluid tight seal, a second closure member (102) arranged to allow venting at at least a first predeterminable pressure and first means (125) urging the first closure member (103) away from the first corresponding seat to allow venting at the first predeterminable pressure when the pendulum (105;712) of the inertially actuable roll-over mechanism is in a second position.

2. A pressure relief valve (100) for venting a fluid from a container comprising an inertially actuable roll-over mechanism, having a pendulum (105;712) and a pivot plate (111;726), arranged, in a first position of the pendulum, to urge a first closure member (103) towards a first corresponding seat to form a fluid tight seal, a second closure member (102) arranged to allow venting at at least a first predeterminable pressure and first means (125) for urging the first closure member (103) away from the first corresponding seat to allow venting at the first predeterminable pressure when the pendulum (105;712) of the inertially actuable roll-over mechanism is in a second position.

3. A pressure relief valve as claimed in either of claims 1 and 2, in which the first means (125) urging or first means (125) for urging the first closure member (103) away from the first corresponding seat is disposed between the first closure member (103) and the first corresponding seat.

4. A pressure relief valve as claimed in any preceding claim, in which the first means (125) urging or first means (125) for urging the first closure member (103) away from the seat comprises at least one of a leaf spring, wave spring or coil spring.

5. A pressure relief valve as claimed in any preceding claim, in which said first predeterminable pressure is between 20 millibars and 120 millibars.

6. A pressure relief valve as claimed in any preceding claim, comprising drainage means (106,140) for urging the first closure member (103) away from the first corresponding seat such that the fluid tight seal can be broken by moving the inertially actuable roll-over mechanism away from the first position.

7. A pressure relief valve as claimed in claim 6, in which the drainage means (106,140) comprises at least a moveable sealing member (106); the moveable sealing member being urged against internal shoulders of an aperture of the second closure member (102) to form a further fluid tight seal.

8. A pressure relief valve as claimed in claim 7, in which the second closure member (102) comprises an adjustment means (107) for setting the force with which the moveable sealing member (106) is urged towards the internal shoulders of the aperture of the second closure member.

9. A pressure relief valve as claimed in any preceding claim, in which the second closure member (102) further comprises a mechanism to allow fluid to flow through the second closure member (102) in at least one of first and second mutually opposing directions via a channel formed in the second closure member (102).

10. A valve as claimed in claim 9 in which the first direction is such that a fluid can flow out of a container incorporating the valve.

11. A valve as claimed in either of claims 9 or 10 in which the second direction is such that a fluid can flow into a container incorporating the valve.

12. A fluid storage tank comprising a pressure relief valve as claimed in any preceding claim.

13. A moveable fluid storage tank comprising a pressure relief valve as claimed in any of claims 1 to 11.

14. A road tanker comprising a fluid storage tank as claimed in claim 13.

## Patentansprüche

1. Druckbegrenzungsventil (100) zum Ablassen eines Fluids aus einem Behälter mit einem trägheitsbetätigten Überrollmechanismus mit einem Pendel (105; 712) und einer Schwenkplatte (111; 72b), der dazu ausgestaltet ist, um, in einer ersten Position des Pendels, ein erstes Verschlussteil (103) in einen entsprechenden Sitz zu drücken, um eine fluiddichte Dichtung zu bilden, mit einem zweiten Verschlussteil (102), das dazu ausgestaltet ist, um das Ablassen bei wenigstens einem ersten vorgebbaren Druck zuzulassen, und mit ersten Mitteln (125), die das erste Verschlussteil (103) aus dem ersten entsprechenden Sitz herausdrücken, um das Ablassen bei dem ersten vorgebbaren Druck zu erlauben, wenn das Pendel (105; 712) des trägheitsbetätigten Überrollmechanismus sich in einer zweiten Position befindet.

2. Druckbegrenzungsventil (100) zum Ablassen eines Fluids aus einem Behälter mit einem trägheitsbetätigten Überrollmechanismus mit einem Pendel (105; 712) und einer Schwenkplatte (111; 726), der dazu ausgestaltet ist, um, in einer ersten Position des Pendels, ein erstes Verschlussteil (103) in einen ersten entsprechenden Sitz zu drücken, um eine fluiddichte Dichtung zu bilden, mit einem zweiten Verschlussteil (102), das dazu ausgestaltet ist, um das Ablassen bei wenigstens einem ersten vorgebbaren Druck zu erlauben, und mit ersten Mitteln (125), um das erste Verschlussteil (103) aus dem ersten entsprechenden Sitz herauszudrücken, um das Ablassen bei dem ersten vorgebbaren Druck zuzulassen, wenn das Pendel (105; 712) des trägheitsbetätigten Überrollmechanismus sich in einer zweiten Position befindet.

3. Druckbegrenzungsventil nach einem der Ansprüche 1 oder 2, bei dem die ersten Mittel (125), die das erste Verschlussteil (103) aus dem ersten entsprechenden Sitz herausdrücken, oder die ersten Mittel (125), um das erste Verschlussteil (103) aus dem ersten entsprechenden Sitz herauszudrücken, zwischen dem ersten Verschlussteil (103) und dem ersten entsprechenden Sitz angeordnet sind.

4. Druckbegrenzungsventil nach einem der vorhergehenden Ansprüche, bei- dem die ersten Mittel (125) , die das erste Verschlussteil (103) aus dem ersten entsprechenden Sitz herausdrücken, oder die ersten Mittel (125), um das erste Verschlussteil (103) aus dem ersten entsprechenden Sitz herauszudrücken, wenigstens eines von einer Blattfeder, einer gewellten Feder oder einer Schraubenfeder aufweisen.

5. Druckbegrenzungsventil nach einem der vorhergehenden Ansprüche, bei dem der erste vorgebbare Druck zwischen 20 mbar und 120 mbar liegt.

6. Druckbegrenzungsventil nach einem der vorhergehenden Ansprüche, das eine Abflusseinrichtung (106, 140) aufweist, um das erste Verschlussteil (103) aus dem ersten entsprechenden Sitz herauszudrücken, so dass die fluiddichte Dichtung geöffnet werden kann, indem der trägheitsbetätigte überrollmechanismus aus der ersten Position fortbewegt wird.

7. Druckbegrenzungsventil nach Anspruch 6, bei dem die Abfluss-. einrichtung (106, 140) wenigstens ein bewegliches Dichtungsteil (106) aufweist, wobei das bewegliche Dichtungsteil gegen die inneren Schultern einer Öffnung des zweiten Verschlussteils (102) gedrückt wird, um eine weitere fluiddichte Dichtung zu bilden.

8. Druckbegrenzungsventil nach Anspruch 7, bei dem das zweite Verschlussteil (102) eine Einstelleinrichtung (107) aufweist, um die Kraft, mit der das bewegliche Dichtungsteil (106) gegen die inneren Schultern der Öffnung des zweiten Verschlussteils gedrückt wird, einzustellen.

9. Druckbegrenzungsventil nach einem der vorhergehenden Ansprüche, bei dem das zweite Verschlussteil (102) ferner einen Mechanismus aufweist, um zu ermöglichen, dass das Fluid durch das zweite Verschlussteil (102) in wenigstens einer von ersten und zweiten, einander entgegengesetzten Richtungen über einen Kanal fließen kann, der in dem zweiten Verschlussteil (102) gebildet ist.

10. Ventil nach Anspruch 9, bei dem die erste Richtung derart ist, dass das Fluid aus einem Behälter, der mit dem Ventil ausgestattet ist, herausfließen kann.

11. Ventil nach Anspruch 9 oder 10, bei dem die zweite Richtung derart ist, dass ein Fluid in einen Behälter, der mit dem Ventil ausgerüstet ist, fließen kann.

12. Fluidspeichertank mit einem Druckbegrenzungsventil nach einem der vorhergehenden Ansprüche.

13. Beweglicher Fluidspeichertank mit einem Druckbegrenzungsventil nach einem der Ansprüche 1 bis 11.

14. Tankfahrzeug mit einem Fluidspeichertank nach Anspruch 13.

## Revendications

1. Soupape de surpression (100) pour décharger un fluide à partir d'un conteneur, comprenant un mécanisme de retournement actionnable par inertie, ayant un pendule (105 ; 712) et une plaque de pivotement (111 ; 726), disposés, dans une première position du pendule, pour solliciter un premier élément de fermeture (103) vers un premier siège correspondant afin de former un joint étanche au fluide, un second élément de fermeture (102) disposé pour permettre une décharge à au moins une première pression prédéterminable et un premier moyen (125) sollicitant le premier élément de fermeture (103) à l'opposé du premier siège correspondant afin de permettre une décharge à la première pression prédéterminable lorsque le pendule (105 ; 712) du mécanisme de retournement actionnable par inertie est dans une seconde position.

2. Soupape de surpression (100) pour décharger un fluide à partir d'un conteneur, comprenant un mécanisme de retournement actionnable par inertie, ayant un pendule (105 ; 712) et une plaque de pivotement (111 ; 726), disposés, dans une première position du pendule, pour solliciter un premier élément de fermeture (103) vers un premier siège correspondant afin de former un joint étanche au fluide, un second élément de fermeture (102) disposé pour permettre une décharge à au moins une première pression prédéterminable et un premier moyen (125) pour solliciter le premier élément de fermeture (103) à l'opposé du premier siège correspondant afin de permettre une décharge à la première pression prédéterminable lorsque le pendule (105 ; 712) du mécanisme de retournement actionnable par inertie est dans une seconde position.

3. Soupape de surpression selon l'une ou l'autre des revendications 1 et 2, dans laquelle le premier moyen (125) sollicitant ou premier moyen (125) pour solliciter le premier élément de fermeture (103) à l'opposé du première siège correspondant est disposé entre le premier élément de fermeture (103) et le premier siège correspondant.

4. Soupape de surpression selon l'une quelconque des revendications précédentes, dans laquelle le premier moyen (125) sollicitant ou premier moyen (125) pour solliciter le premier élément de fermeture (103) à l'opposé du siège comprend au moins l'un parmi un ressort à lame, un ressort spiral ou un ressort hélicoïdal.

5. Soupape de surpression selon l'une quelconque des revendications précédentes, dans laquelle ladite première pression prédéterminable est entre 20 millibars et 120 millibars.

6. Soupape de surpression selon l'une quelconque des revendications précédentes, comprenant un moyen de drainage (106, 140) pour solliciter le premier élément de fermeture (103) à l'opposé du premier siège correspondant de telle sorte que le joint étanche au fluide puisse être rompu par déplacement du mécanisme de retournement actionnable par inertie à l'opposé de la première position.

7. Soupape de surpression selon la revendication 6, dans laquelle le moyen de drainage (106, 140) comprend au moins un élément de scellement étanche mobile (106), l'élément de scellement étanche mobile étant sollicité contre des épaulements internes d'une ouverture du second élément de fermeture (102) afin de former un autre joint étanche au fluide.

8. Soupape de surpression selon la revendication 7, dans laquelle le second élément de fermeture (102) comprend un moyen d'ajustement (107) pour régler la force avec laquelle l'élément de scellement étanche mobile (106) est sollicité vers les épaulements internes de l'ouverture du second élément de fermeture.

9. Soupape de surpression selon l'une quelconque des revendications précédentes, dans laquelle le second élément de fermeture (102) comprend en outre un mécanisme pour permettre au fluide de s'écouler à travers le second élément de fermeture (102) dans au moins l'une des première et seconde directions s'opposant mutuellement par l' intermédiaire d' un canal formé dans le second élément de fermeture (102).

10. Soupape selon la revendication 9, dans laquelle la première direction est telle qu'un fluide peut s'écouler hors d'un conteneur incorporant la soupape.

11. Soupape selon l'une ou l'autre des revendications 9 et 10, dans laquelle la seconde direction est telle qu'un fluide peut s'écouler dans un conteneur incorporant la soupape.

12. Réservoir de stockage de fluide comprenant une soupape de surpression telle que définie à l'une quelconque des revendications précédentes.

13. Réservoir mobile de stockage de fluide comprenant une soupape de surpression telle que définie à l'une quelconque des revendications 1 à 11.

14. Citerne routière comprenant un réservoir de stockage de fluide tel que défini à la revendication 13.
